(19) Europäisches Patentamt
European Patent Office
Office européen des brevets

(11) **EP 4 432 198 A1**

(12) **EUROPEAN PATENT APPLICATION**

(43) Date of publication:
**18.09.2024   Bulletin 2024/38**

(21) Application number: **23161993.3**

(22) Date of filing: **15.03.2023**

(51) International Patent Classification (IPC):
***G06Q 20/38*** (2012.01)       ***G06Q 20/40*** (2012.01)
***G06N 3/098*** (2023.01)

(52) Cooperative Patent Classification (CPC):
**G06N 3/098; G06Q 20/3827; G06Q 20/383;**
**G06Q 20/4016; G06Q 20/405;** G06N 3/0442;
G06N 3/045; G06N 3/084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Featurespace Limited**
**Cambridge, Cambridgeshire CB4 0GF (GB)**

(72) Inventors:
• **PEREZ, Iker**
  **Cambridge, CB4 0GF (GB)**
• **WONG, Jason**
  **Cambridge, CB4 0GF (GB)**
• **SUTTON, David**
  **Cambridge, CB4 0GF (GB)**

(74) Representative: **Mishcon de Reya LLP**
**Africa House**
**70 Kingsway**
**London WC2B 6AH (GB)**

(54) **PRESERVING PRIVACY AND TRAINING NEURAL NETWORK MODELS**

(57)    Various measures to preserve privacy and to train neural network models are provided. A federated learning system comprises a payment decisioning server associated with a payment decisioning entity and a financial institution server associated with a financial institution. A transaction involves a customer of the financial institution. In an example method, the payment decisioning server transmits, to the financial institution server, a query relating to the customer. In the example method, the payment decisioning server receives, from the financial institution server, a response to the query, the response comprising an account embedding, the account embedding having been derived by the financial institution server using account information associated with the customer as input to a financial institution private embedding model. In the example method, the payment decisioning server generates a transaction decision for the transaction using the account embedding and transaction data associated with the transaction.

Fig. 14

## Description

Technical Field

The present invention relates to preserving privacy and training neural network models. In particular, it relates to preserving privacy and training neural network models in federated learning systems.

Background

Digital payments have exploded over the last twenty years, with more than three-quarters of global payments using some form of payment card or electronic wallet. Point of sale systems are progressively becoming digital rather than cash-based. Put simply, global systems of commerce are now heavily reliant on electronic data processing platforms. This presents many engineering challenges that are primarily hidden from a lay user. For example, digital transactions need to be completed in real-time, i.e. with a minimal level of delay experienced by computer devices at the point of purchase. Digital transactions also need to be secure and resistant to attack and exploitation. The processing of digital transactions is also constrained by the historic development of global electronic systems for payments. For example, much infrastructure is still configured around models that were designed for mainframe architectures in use over 50 years ago.

As digital transactions increase, new security risks also become apparent. Digital transactions present new opportunities for fraud and malicious activity. In 2015, it was estimated that 7% of digital transactions were fraudulent, and that figure has only increased with the transition of more economic activity online. Fraud losses are growing.

While risks like fraud are an economic issue for companies involved in commerce, the implementation of technical systems for processing transactions is an engineering challenge. Traditionally, banks, merchants and card issuers developed "paper" rules or procedures that were manually implemented by clerks to flag or block certain transactions. As transactions became digital, one approach to building technical systems for processing transactions has been to supply computer engineers with these sets of developed criteria and to ask the computer engineers to implement them using digital representations of the transactions, i.e. convert the hand-written rules into coded logic statements that may be applied to electronic transaction data. This traditional approach has run into several problems as digital transaction volumes have grown. First, any applied processing needs to take place at "real-time", e.g. with millisecond latencies. Second, many thousands of transactions need to be processed every second (e.g., a common "load" may be 1000-2000 per second), with load varying unexpectedly over time (e.g., a launch of a new product or a set of tickets can easily increase an average load level by several multiples). Third, the digital storage systems of transaction processors and banks are often siloed or partitioned for security reasons, yet digital transactions often involve an interconnected web of merchant systems. Fourthly, large scale analysis of actual reported fraud and predicted fraud is now possible. This shows that traditional approaches to fraud detection are found wanting; accuracy is low and false positives are high. This then has a physical effect on digital transaction processing, more genuine point-of-sale and online purchases are declined and those seeking to exploit the new digital systems often get away with it.

In the last few years, a more machine learning approach has been taken to the processing of transaction data. As machine learning models mature in academia, engineers have begun to attempt to apply them to the processing of transaction data. However, this again runs into problems. Even if engineers are provided with an academic or theoretical machine learning model and asked to implement it, this is not straightforward. For example, the problems of large-scale transaction processing systems come into play. Machine learning models do not have the luxury of unlimited inference time as in the laboratory. This means that it is simply not practical to implement certain models in a real-time setting, or that they need significant adaptation to allow real-time processing in the volume levels experienced by real-world servers. Moreover, engineers need to contend with the problem of implementing machine learning models on data that is siloed or partitioned based on access security, and in situations where the velocity of data updates is extreme. The problems faced by engineers building transaction processing systems may thus be seen as being akin to those faced by network or database engineers; machine learning models need to be applied but meeting system throughput, query response time and data security constraints set by the processing infrastructure. There are no easy solutions to these problems. Indeed, the fact that many transaction processing systems are confidential, proprietary, and based on old technologies means that engineers do not have the body of knowledge developed in these neighbouring fields and often face challenges that are unique to the field of transaction processing. Moreover, the field of large-scale practical machine learning is still young, and there are few established design patterns or textbooks that engineers can rely on.

Automated decisioning systems within payment processing infrastructure are used to approve or decline transactions based on anomaly level or risk propensity and, in some cases, to subsequently refer the transactions for analyst review. Relevant data for generating those decisions, pertaining to private citizens, is held by the collection of banks that participate in the payment processing infrastructure. Without this data, decisions are made based on an incomplete view of the real world. At best, this reduces model accuracy. At worst, this creates exploitable weak points that enable financial criminals to systematically and predictably evade detection. Relevant financial crimes here include, but are not limited to, fraud, money laundering, terrorist financing, scamming, people trafficking and sanction evasion.

Data privacy regulations prohibit pooling data directly relating to private citizens, due to data privacy rights for the citizens involved. Citizens must be guaranteed privacy and anonymity in data processing applications that occur outside the trusted environment of their bank, which is the data processor and owner.

Existing solutions for controlling automated approval of non-anomalous payments do not make use of private Know Your Customer (KYC) data held separately by a federation of banks.

The problem, in application to payment processing, is unsolved.

Federated learning systems typically aggregate neural network weight parameters across the nodes within the federation. This produces an aggregated model that is shared across each node in the federation. Differential privacy approaches have been applied to this weight aggregation process in order to provide privacy guarantees to the private training data held across the federation's nodes.

Innovation in artificial intelligence and machine learning is making advances to provision financial system actors with tools for fraud prevention and anti-money laundering. However, existing platforms offer bespoke solutions for individual institutions; drawing from customer behaviour datasets private to each bank, acquirer or payments platform. Independent assessments suggest that isolated deployments can miss the big picture in increasing cross-border financial flows. Ideally, systems designed to detect illegal activity would access large pools of decentralized data across networked institutions. However, this poses challenging trade-offs due to confidentiality requirements and a need to limit identifiability of innocent individuals.

Collaborative learning and Federated Learning (FL) offer an opportunity for the development of financial crime solutions that draw from private data, while protecting the sensitive information of participating entities. Along with data security, availability and compliance, FL presents a key challenge in need of research-intensive innovation, as identified by international standard-setting bodies and regulators. However, FL platforms vary according to requirements, such as privacy specifications, threat considerations and data processing constraints. No all-round solution exists, and popular approaches rely on trusted aggregators to combine models trained by data owners in isolated institutions. This is often accomplished by score averaging or parameter pooling, and provides a baseline level of privacy, because exchanged information is limited to aggregated metrics that can be endowed with differential privacy in communication protocols. However, these methods are subject to vulnerabilities, including interoperability or unwanted biases. Also, shared communications may leak information about the underlying data.

Summary

Aspects of the present invention are set out in the appended independent claims. Certain variations of the invention are then set out in the appended dependent claims. Further aspects, variations and examples are presented in the detailed description below.

Brief Description of the Drawings

Examples of the invention will now be described, by way of example only, with reference to the accompanying drawings, in which:

FIGS. 1A to 1C are schematic diagrams showing different example electronic infrastructures for transaction processing.
FIGS. 2A and 2B are schematic diagrams showing different examples of data storage systems for use by a machine learning transaction processing system.
FIGS. 3A and 3B are schematic diagrams showing different examples of transaction data.
FIG. 4 is a schematic diagram showing example components of a machine learning transaction processing system.
FIGS. 5A and 5B are sequence diagrams showing an example set of processes performed by different computing entities on transaction data.
FIG. 6 is a table showing example threat models.
FIG. 7 is a schematic diagram showing an example vanilla recurrent architecture for anomaly detection.
FIG. 8 is a schematic diagram showing an example data journey at training time in a centralized anomaly modelling setting.
FIG. 9 is a schematic diagram showing example transaction data.
FIG. 10 is a schematic diagram showing an example procedure to query key and value pairs from account identifiers.
FIG. 11 is a schematic diagram showing an example procedure to noise and return account embeddings to a payment processor server.
FIG. 12 is a schematic diagram showing an example procedure to unlock relevant account data from financial institutions.

FIG. 13 is a schematic diagram showing an example procedure to feed profiles and features into a recurrent model.
FIG. 14 is a schematic diagram showing an example of a complete heterogenous compartmentalized federated model architecture.
FIG. 15 is a schematic diagram showing a worked example of a data journey in an example federated learning system.
FIG. 16 is a schematic diagram showing an example of a privacy-preserving collaborative anomaly detection system within the context of a payment processing network.
FIG. 17 is a schematic diagram showing example centralized modelling stages.
FIG. 18 is a schematic diagram showing example federated modelling stages.
FIG 19 is a schematic diagram showing another example of a privacy-preserving collaborative anomaly detection system within the context of a payment processing network.

Detailed Description

*Introduction*

Certain examples described herein relate to measures for use in a machine learning system for use in transaction processing. In certain examples, a machine learning system is applied in real-time, high-volume transaction processing pipelines to provide an indication of whether a transaction or entity matches previously observed and/or predicted patterns of activity or actions, e.g. an indication of whether a transaction or entity is "normal" or "anomalous". The term "behavioural" is used herein to refer to this pattern of activity or actions. The indication may comprise a scalar value normalised within a predefined range (e.g., 0 to 1) that is then useable to prevent fraud and other misuse of payment systems. The machine learning systems may apply machine learning models that are updated as more transaction data is obtained, e.g. that are constantly trained based on new data, so as to reduce false positives and maintain accuracy of the output metric. Examples described herein relate to improved handling of such data. The present examples may be particularly useful for preventing fraud in cases where the physical presence of a payment card cannot be ascertained (e.g., online transactions referred to as "card-not-present") or for commercial transactions where high-value transactions may be routine and where it may be difficult to classify patterns of behaviour as "unexpected". As such, the present examples facilitate the processing of transactions as these transactions to being primarily "online", i.e. conducted digitally over one or more public communications networks.

Certain examples described herein allow machine learning models to be tailored to be specific to certain entities, such as account holders and merchants. For example, the machine learning models may model entity-specific patterns of behaviour as opposed to general group or aggregate behaviour that results in poor accuracy. The measures and machine learning systems described herein are able to provide dynamically updating machine learning models despite large transaction flows and/or despite the need for segregation of different data sources. Again, examples described herein provide improved measures for reading and storing machine learning model data to be used in such machine learning models.

The present examples may be applied to a wide variety of digital transactions, including, but not limited to, card payments, so-called "wire" transfers, peer-to-peer payments, Bankers' Automated Clearing System (BACS) payments, and Automated Clearing House (ACH) payments. The output of the machine learning system may be used to prevent a wide variety of fraudulent and criminal behaviour such as card fraud, application fraud, payment fraud, merchant fraud, gaming fraud and money laundering.

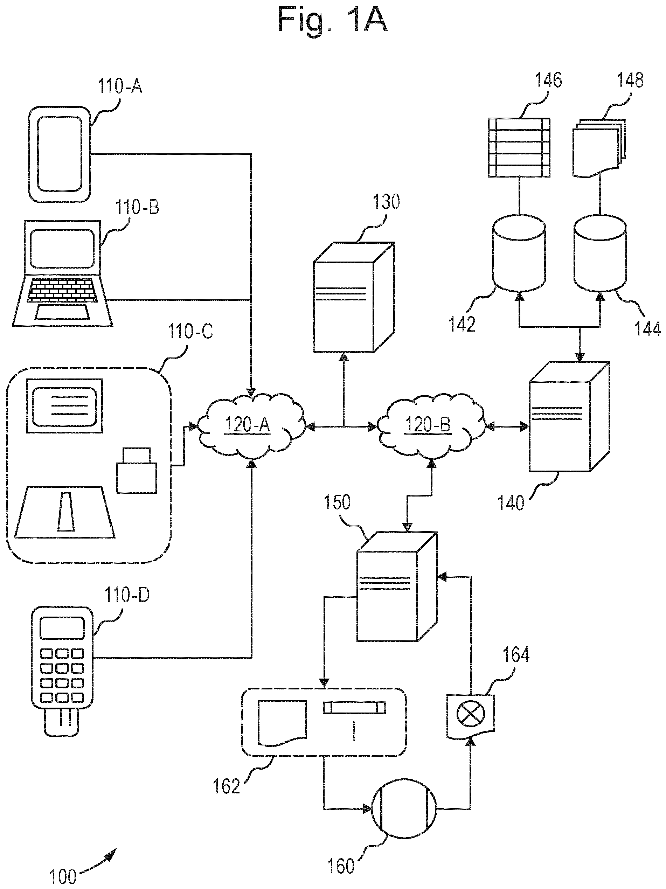

The present example machine learning systems, e.g. as configured and/or as trained and/or as described according to FIGS. 1A to 19 below, allow for fast and secure inference that can be easily parallelised to provide second or sub-second processing latencies and to manage large processing volumes (e.g., billions of transactions a year).

More specifically, examples described herein enable the sharing of private data pertaining to individual account holders, which is subject to strict data protection regulations, and which is held separately and securely by a collection of independent banks. They enable this data to be used in combination to identify payment anomalies across a payments network and, thus, to control payment processing switches that automate the approval of non-anomalous payment requests. In conformity with data protection regulations, the private data never leaves the account holder's bank in raw or usable form. Additionally, the data privacy and anonymity of individual account holders is not compromised.

Examples described herein provide various differences over existing systems.

Some examples combine local differential privacy techniques and resampling techniques with federated embeddings, where the techniques are applied to the embedding values rather than learned weights, and where the model architectures are not shared between nodes of the payment system. In other words, the models are "private".

Some examples use an attention mechanism, split across the federation of nodes, as an information retrieval tool. This permits k-anonymised queries and communications.

Some examples use private differentiable models at banks, an attention network at a payment decisioning server, and a chain-rule-based back propagation technique. The Society for Worldwide Interbank Financial Telecommunication (SWIFT) is generally used herein as an example of a payment processor which may implement such a payment decisioning server. However, such payment decisioning servers may be implemented by other payment processors and/or other entities in other examples. For example, other payment processing organisations may implement techniques and systems described herein and/or other payment channels may be used. In a specific example, the payment decisioning server is not implemented by a payment processor, but is implemented by an anomaly detection entity, such as a fraud detection entity and/or a fraud prevention entity. Such an entity may communicate anomaly detection results to a payment processor.

*Certain Term Definitions*

The term "data" is used in different contexts herein to refer to digital information, such as, but not limited to, that represented by known bit structures within one or more programming languages. In use, data may refer to digital information that is stored as bit sequences within computer memory. Certain machine learning models may operate on structured arrays of data of a predefined bit format. Using terms of the art, these may be referred to a multidimensional arrays or "tensors". It should be noted that for machine learning methods multidimensional arrays, e.g. with a defined extent in multiple dimensions, may be "flattened" so as to be represented (e.g., within memory) as a sequence or vector of values stored according to the predefined format (e.g., n-bit integer or floating point number, signed or unsigned). Hence, the term "tensor" as used herein covers multidimensional arrays with one or more dimensions (e.g., vectors, matrixes, volumetric arrays etc). Data may, however, take other forms.

The term "structured numeric representation" is used to refer to numeric data in a structured form, such as an array of one or more dimensions that stores numeric values with a common data type, such as integers or float values. A structured numeric representation may comprise a tensor (as used within machine learning terminology). A structured numeric representation is typically stored as a set of indexed and/or consecutive memory locations, e.g. a one-dimensional array of 64-bit floats may be represented in computer memory as a consecutive sequence of 64-bit memory locations in a 64-bit computing system.

The term "transaction data" is used herein to refer to electronic data that is associated with a transaction. A transaction comprises a series of communications between different electronic systems to implement a payment or exchange. In general, transaction data may comprise data indicating events (e.g., actions undertaken in time) that relate to, and may be informative for, transaction processing. Transaction data may comprise structured, unstructured and semistructured data. In certain cases, transaction data may be used broadly to refer to actions taken with respect to one or more electronic devices. Transaction data may take a variety of forms depending on the precise implementation. However, different data types and formats may be converted by pre or post processing as appropriate.

The term "interface" is used herein to refer to any physical and/or logical interface that allows for one or more of data input and data output. An interface may be implemented by a network interface adapted to send and/or receive data, or by retrieving data from one or more memory locations, as implemented by a processor executing a set of instructions. An interface may also comprise physical (network) couplings over which data is received, such as hardware to allow for wired or wireless communications over a particular medium. An interface may comprise an application programming interface and/or a method call or return. For example, in a software implementation, an interface may comprise passing data and/or memory references to a function initiated via a method call, where the function comprises computer program code that is executed by one or more processors; in a hardware implementation, an interface may comprise a wired interconnect between different chips, chipsets or portions of chips. In the drawings, an interface may be indicated by a boundary of a processing block that has an inward and/or outward arrow representing a data transfer.

The terms "component" and "module" are used interchangeably to refer to either a hardware structure that has a specific function (e.g., in the form of mapping input data to output data) or a combination of general hardware and specific software (e.g., specific computer program code that is executed on one or more general purpose processors). A component or module may be implemented as a specific packaged chipset, for example, an Application Specific Integrated Circuit (ASIC) or a programmed Field Programmable Gate Array (FPGA), and/or as a software object, class, class instance, script, code portion or the like, as executed in use by a processor.

The term "machine learning model" is used herein to refer to at least a hardware-executed implementation of a machine learning model or function. Known models within the field of machine learning include logistic regression models, Naive Bayes models, Random Forests, Support Vector Machines and artificial neural networks. Implementations of classifiers may be provided within one or more machine learning programming libraries including, but not limited to, scikit-leam, TensorFlow, and PyTorch.

The term "map" is used herein to refer to the transformation or conversion of a first set of data values to a second set of data values. The two sets of data values may be arrays of different sizes, with an output array being of lower dimensionality than an input array. The input and output arrays may have common or different data types. In certain examples, the mapping is a one-way mapping to a scalar value.

The term "metadata" is used herein to relate to information that provides information about other data.

The term "federated learning" is used herein to refer to training models across decentralized edge systems without exchanging local data or models stored at the decentralized edge systems. Federated learning may also be referred to as "collaborative learning".

The term "system" is used herein to refer to one or more nodes, servers, or the like.

The term "financial institution" is used herein to refer to any entity that provides a service as an intermediary for different types of financial transaction. Examples of financial institutions include, but are not limited to, banks and building societies.

The term "payment processor" is used herein to refer to any entity that enables financial transactions.

The term "customer" is used herein to refer to a recipient of goods and/or services. As used herein, the term "customer" is used both for recipients that receive goods and/or services in exchange for money and for recipients that receive goods and/or services not in exchange for money. The term "customer" as used herein may encompass one or more natural and/or legal persons. In some examples, a customer corresponds to an account holder. In other examples, a customer corresponds to one or both of a cardholder and an account holder. In particular, in a card processing scenario, sensitive "customer" information may contain information pertaining to both the owner of the account and the holder of the card.

The term "embedding" is used herein to refer to a numerical representation of other data. The other data may be numerical, non-numerical, or a combination of both. In examples, the numerical representation is a vector representation. In the context of federated learning, the vector representation is a learned, continuous representation of discrete variables.

The term "preserving privacy" is used herein to refer to any increase in privacy. This encompasses incremental increases to privacy to full privacy. The increase is relative to a setting in which the privacy-preserving measure is not used.

The term "transaction decision" is used herein to refer to any decision related to a transaction. Examples of such decisions include, but are not limited to, approval, rejection, and refer for further review.

The term "model" is used herein in the context of a machine learning model to refer to an entity that is trained on a training dataset and that outputs data for given input data based on such training.

The term "transaction feature data" is used herein to refer to data within transaction data that represents one or more features of the transaction. Examples of such features include, but are not limited to, currency, amount, date, and time.

The term "attention mechanism" is used herein to refer to a neural attention mechanism. A neural attention mechanism separately models the relevance of datum to a prediction and its impact on the prediction. A mathematical operation combines the relevance and impact terms..

The term "private" is used herein in connection with a model to refer to one or more attributes of a model not being known or shared outside of an entity that uses the model. Examples of such attributes include, but are not limited to, weights, architectures and data schemas.

The term "payment decisioning" is used herein to refer to making a decision relating to a payment. Examples of such decisions include, but are not limited to, approving the payment, declining the payment, and referring the payment for further analysis.

The term "account embedding" is used herein to refer to an embedding that is derived from account information.

The term "server" is used herein to refer to any computer network element that serves, or provides functionality for, one or more other entities in the network. A server may be implemented in hardware and/or software.

*Example Transaction Processing System*

FIGS. 1A to 1C show a set of example transaction processing systems 100, 102, 104. These example transaction processing systems are described to provide context for the inventions discussed herein but should not be seen as limiting; the configuration of any one implementation may differ based on the specific requirements of that implementation. However, the described example transaction processing systems allow those skilled in the art to identify certain high-level technical features that are relevant for the description below. The three example transaction processing systems 100, 102, 104 show different areas where variation may occur.

FIGS. 1A to 1C show a set of client devices 110 that are configured to initiate a transaction. In this example, the set of client devices 110 comprise a smartphone 110-A, a computer 110-B, a point-of-sale (POS) system 110-C and a portable merchant device 110-D. These client devices 110 provide a set of non-exhaustive examples. Generally, any electronic device or set of devices may be used to undertake a transaction. In one case, the transaction comprises a purchase or payment. For example, the purchase or payment may be an online or mobile purchase or payment made by way of the smartphone 110-A or the computer 110-B, or may be a purchase or payment made at a merchant premises, such as via the POS system 110-C or the portable merchant device 110-D. The purchase or payment may be for goods and/or services.

In FIGS. 1A to 1C, the client devices 110 are communicatively coupled to one or more computer networks 120. The client devices 110 may be communicatively coupled in a variety of ways, including by one or more wired and/or wireless networks including telecommunications networks. In preferred examples, all communications across the one or more computer networks are secured, e.g. using Transport Layer Security (TLS) protocols. In FIG. 1A, two computer networks are shown 120-A and 120-B. These may be separate networks or different portions of a common network. The first computer network 120-A communicatively couples the client devices 110 to a merchant server 130. The merchant server 130 may execute a computer process that implements a process flow for the transaction. For example, the merchant server 130 may be a back-end server that handles transaction requests received from the POS system 110-C or the portable merchant device 110-D or may be used by an online merchant to implement a website where purchases may be made. It will be appreciated that the examples of FIGS. 1A to 1C are necessary simplifications of actual architectures; for example, there may be several interacting server devices that implement an online merchant, including separate server devices for providing HyperText Markup Language (HTML) pages detailing a product and/or service and for handling a payment process.

In FIG. 1A, the merchant server 130 is communicatively coupled to a further set of back-end server devices to process the transaction. In FIG. 1A, the merchant server 130 is communicatively coupled to a payment processor server 140 via a second network 120-B. The payment processor server 140 is communicatively coupled to a first data storage device 142 storing transaction data 146 and a second data storage device 144 storing ancillary data 148. The transaction data 146 may comprise batches of transaction data relating to different transactions that are undertaken over a period of time. The ancillary data 148 may comprise data associated with the transactions, such as records storing merchant and/or end user data. In FIG. 1A, the payment processor server 140 is communicatively coupled to a machine learning server 150 via the second network 120-B. The machine learning server 150 implements a machine learning system 160 for the processing of transaction data. The machine learning system 160 is arranged to receive input data 162 and to map this to output data 164 that is used by the payment processor server 140 to process a particular transaction, such as one arising from the client devices 110. In one case, the machine learning system 160 receives at least transaction data associated with the particular transaction and provides an alert or numeric output that is used by the payment processor server 140 to determine whether the transaction is to be authorised (i.e., approved) or declined. As such, the output of the machine learning system 160 may comprise a label, alert or other indication of fraud, or general malicious or anomalous activity. The output may comprise a probabilistic indication, such as a score or probability. In one case, the output data 164 may comprise a scalar numeric value. The input data 162 may further comprise data derived from one or more of the transaction data 146 and the ancillary data 148. In one case, the output data 164 indicates a level of deviation from a specific expected pattern of behaviour based on past observations or measurements. For example, this may indicate fraud or criminal behaviour as this often differs significantly from observed patterns of behaviour, especially on a large scale. The output data 164 may form a behavioural measure. The expected pattern of behaviour may be defined, either explicitly or implicitly, based on observed interactions between different entities within the transaction process flow, such as end users or customers, merchants (including point-of-sale and back-end locations or entities where these may differ), and banks.

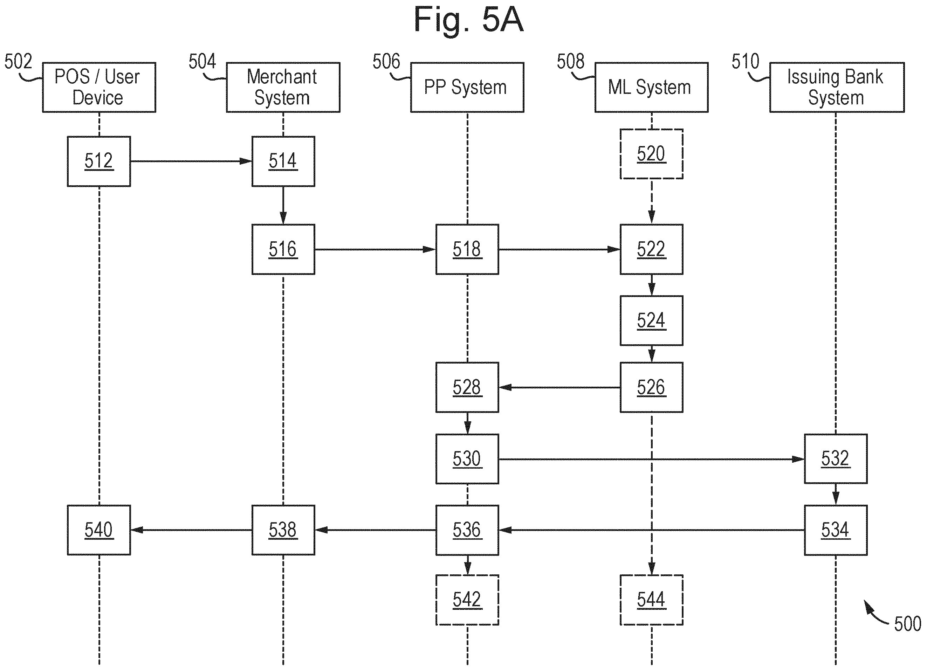

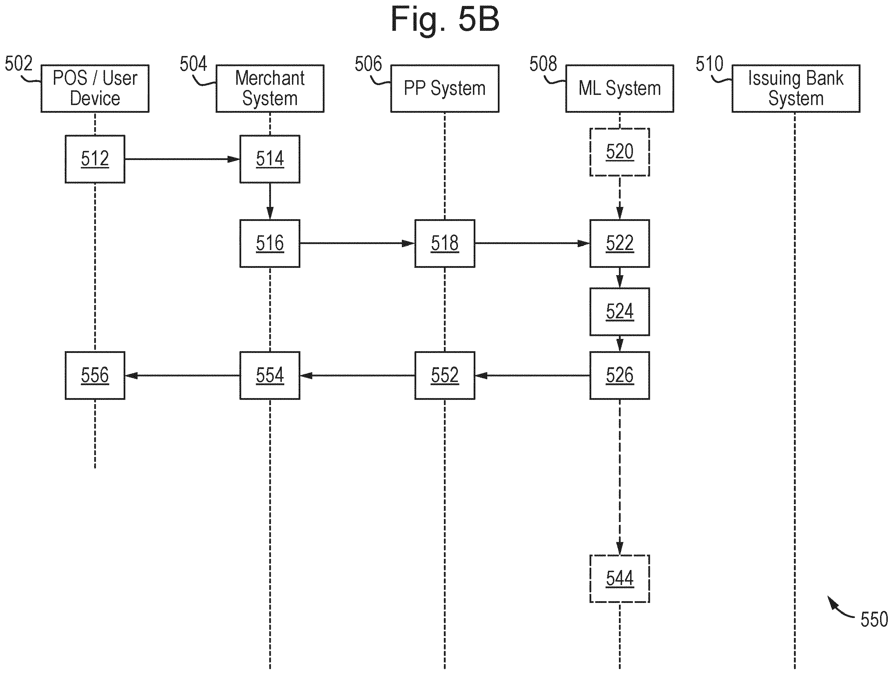

The machine learning system 160 may be implemented as part of a transaction processing pipeline. An example transaction processing pipeline is described later with respect to FIGS. 5A and 5B. A transaction processing pipeline may comprise electronic communications between the client devices 110, merchant server 130, payment processor server 140 and machine learning server 150. Other server devices may also be involved, such as banking servers that provide authorisation from an issuing bank. In certain cases, client devices 110 may directly communicate with the payment processor server 140. In use, a transaction processing pipeline typically needs to be completed within one or two hundred milliseconds. In general, sub-second processing times may be deemed real-time (e.g., human beings typically perceive events on a timespan of 400ms). Furthermore, 100-200ms may be the desired maximum latency of the full round-trip-time for transaction processing; within this timespan, the time allotted for the machine learning system 160 may be a small fraction of this full amount, such as 10ms (i.e., less that 5-10% of the target processing time), as most of the time may be reserved for other operations in the transaction processing flow. This presents a technical constraint for the implementation of the machine learning system 160. Furthermore, in real-world implementations, average processing volumes may be on the order of 1000-2000 a second. This means that most "off-the-shelf" machine learning systems are not suitable to implement machine learning system 160. It further means that most machine learning approaches described in academic papers cannot be implemented within the aforementioned transaction processing pipeline without non-obvious adaptations. There is also a problem that anomalies are, by their very nature, rare events and so accurate machine learning systems are difficult to train.

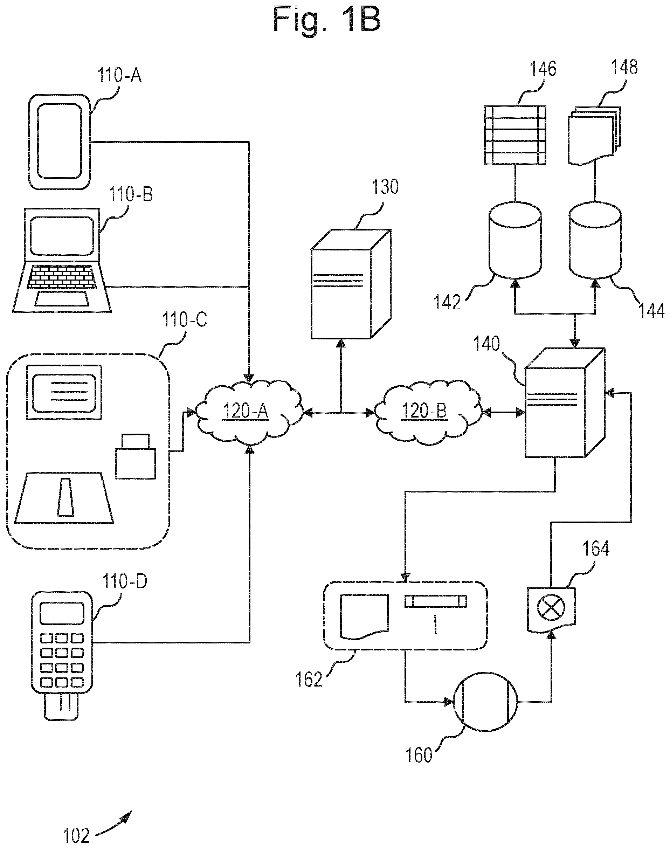

FIG. 1B shows a variation 102 of the example transaction processing system 100 of FIG. 1A. In this variation 102, the machine learning system 160 is implemented within the payment processor computer infrastructure, e.g. executed by the payment processor server 140 and/or executed on a locally coupled server within the same local network as the payment processor server 140. The variation 102 of FIG. 1B may be preferred for larger payment processors as it allows faster response times, greater control, and improved security. However, functionally, the transaction processing pipeline may be similar to that of FIG. 1A. For example, in the example of FIG. 1A, the machine learning system 160 may be initiated by a secure external application programming interface (API) call, such as a Representation State Transfer (REST) API call using Hypertext Transfer Protocol Secure (HTTPS), while in FIG. 1B, the machine learning system 160 may be initiated by an internal API call, but where a common end API may handle both requests (e.g., the REST HTTPS API may provide an external wrapper for the internal API).

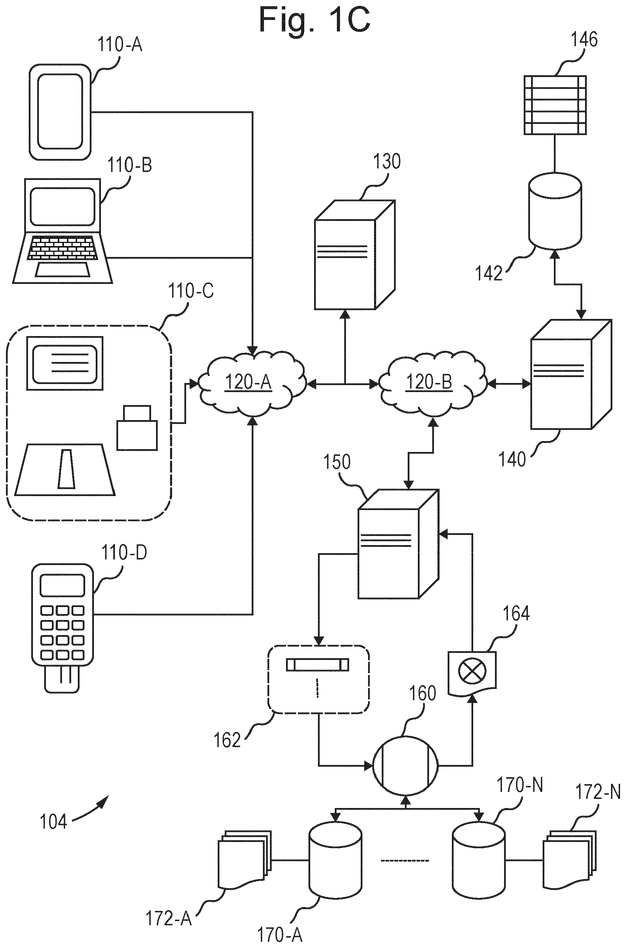

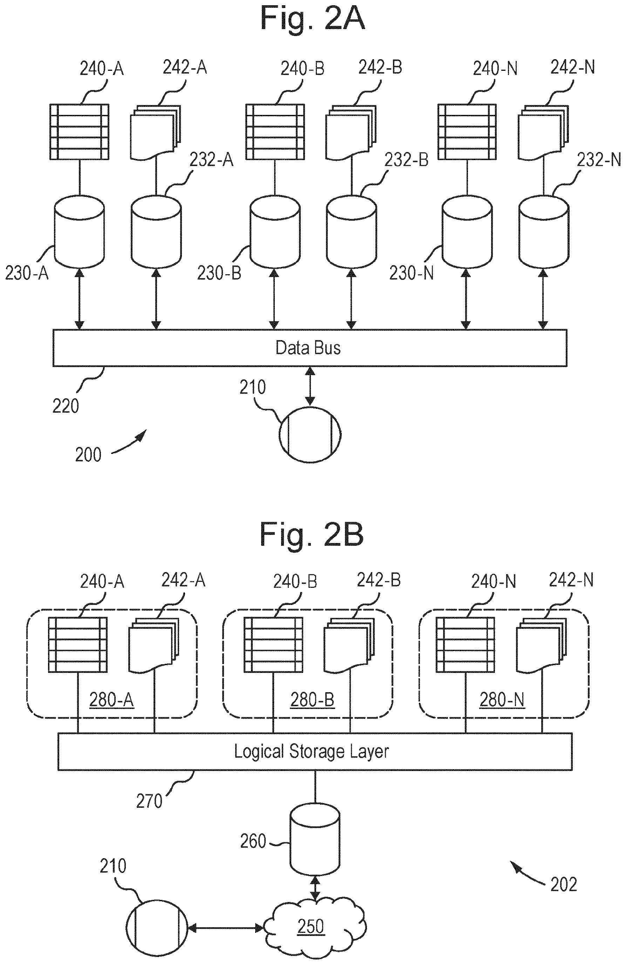

FIG. 1C shows another variation 104 of the example transaction processing system 100 of FIG. 1A. In this variation 104, the machine learning system 160 is communicatively coupled to local data storage devices 170. For example, data storage devices 170 may be on the same local network as machine learning server 150 or may comprise a local storage network accessible to the machine learning server 150. In this case, there are a plurality of local data storage devices 170-A to 170-N, where each data storage device stores partitioned ancillary data 172. The partitioned ancillary data 172 may comprise parameters for one or more machine learning models. In one case, the ancillary data 172 may comprise a state for machine learning models, where the state may relate to one or more specific entities such as a user or merchant. The partitioning of the ancillary data 172 may need to be applied to meet security requirements set by a third party, such as the payment processor, one or more banks and/or one or more merchants. In use, the machine learning system 160 accesses the ancillary data 172-A to 172-N via the plurality of local data storage devices 170-A to 170-N based on the input data 162. For example, the input data 162 may be received by way of an API request from a particular source and/or may comprise data that identifies that a particular partition is to be used to handle the API request. More details of different storage systems that may be applied to meet security requirements are set out in FIGS. 2A and 2B.

*Example Data Storage Configurations*

FIGS. 2A and 2B show two example data storage configurations 200 and 202 that may be used by an example machine learning system 210 for the processing of transaction data. The examples of FIGS. 2A and 2B are two non-limiting examples that show different options available for implementations, and particular configurations may be selected according to individual circumstances. The machine learning system 210 may comprise an implementation of the machine learning system 160 described in the previous examples of FIGS. 1A to 1C. The examples of FIGS. 2A and 2B allow for the processing of transaction data that is secured using heterogeneous cryptographic parameters, e.g. for the machine learning system 210 to securely process transaction data for heterogeneous entities. It will be appreciated that the configurations of FIGS. 2A and 2B may not be used if the machine learning system 160 is implemented for a single set of secure transaction and ancillary data, e.g. within an internal transaction processing system or as a hosted system for use by a single payment processor.

FIG. 2A shows a machine learning system 210 communicatively coupled to a data bus 220. The data bus 220 may comprise an internal data bus of the machine learning server 150 or may form part of storage area network. The data bus 220 communicatively couples the machine learning system 210 to a plurality of data storage devices 230, 232. The data storage devices 230, 232 may comprise any known data storage device such as magnetic hard disks and solid-state devices. Although data storage devices 230, 232 are shown as different devices in FIG. 2A they may alternatively form different physical areas or portions of storage within a common data storage device. In FIG. 2A, the plurality of data storage devices 230, 232 store historical transaction data 240 and ancillary data 242. In FIG. 2A, a first set of data storage devices 230 store historical transaction data 240 and a second set of data storage devices 232 store ancillary data 242. Ancillary data 242 may comprise one or more of model parameters for a set of machine learning models (such as trained parameters for a neural network architecture and/or configuration parameters for a random forest model) and state data for those models. In one case, the different sets of historical transaction data 240-A to N and ancillary data 242-A to N are associated with different entities that securely and collectively use services provided by the machine learning system 210, e.g. these may represent data for different banks that need to be kept separate as part of the conditions of providing machine learning services to those entities.

FIG. 2B shows another way different sets of historical transaction data 240-A to N and ancillary data 242-A to N may be stored. In FIG. 2B the machine learning system 210 is communicatively coupled, via data transfer channel 250, to at least one data storage device 260. The data transfer channel 250 may comprise a local storage bus, local storage area network, and/or remote secure storage coupling (e.g., as overlaid over insecure networks such as the Internet). In FIG. 2B, a secure logical storage layer 270 is provided using the physical data storage device 260. The secure logical storage layer 270 may be a virtualized system that appears as separate physical storage devices to the machine learning system 210 while actually being implemented independently upon the at least one data storage device 260. The logical storage layer 270 may provide separate encrypted partitions 280 for data relating to groups of entities (e.g., relating to different issuing banks etc.) and the different sets of historical transaction data 240-A to N and ancillary data 242-A to N may be stored in the corresponding partitions 280-A to N. In certain cases, entities may be dynamically created as transactions are received for processing based on data stored by one or more of the server systems shown in FIGS. 1A to 1C.

*Example Transaction Data*

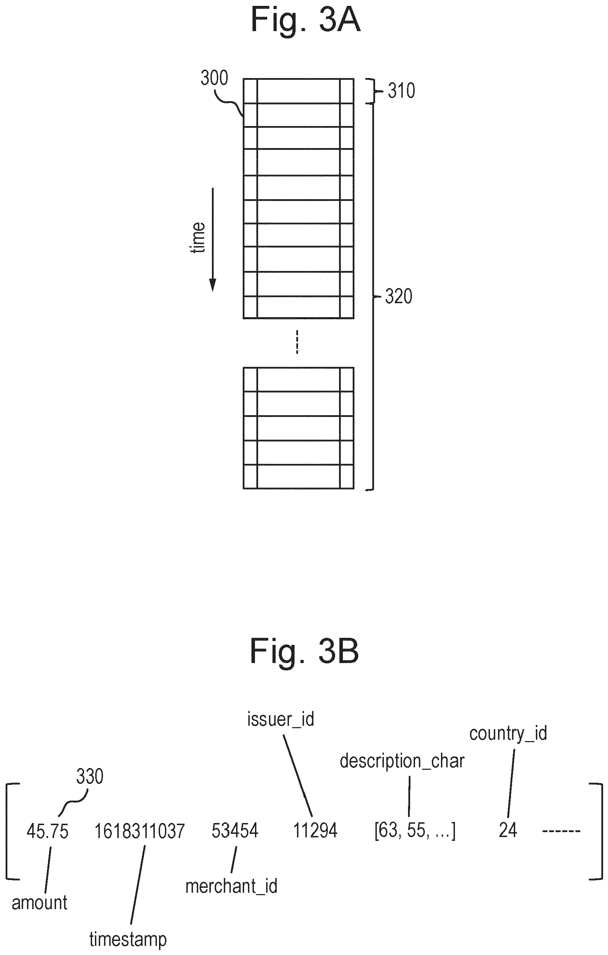

FIGS. 3A and 3B show examples of transaction data that may be processed by a machine learning system such as 160 or 210. FIG. 3A shows how transaction data may comprise a set of records 300, where each record has a timestamp and comprises a plurality of transaction fields. The records 300 may be time-ordered or may be strictly ordered in another manner. In some examples, transaction data may, optionally, be grouped and/or filtered based on the timestamp. For example, FIG. 3A shows a partition of transaction data into current transaction data 310 that is associated with a current transaction and "older" or historical transaction data 320 that is within a predefined time range of the current transaction. The time range may be set as a hyperparameter of any machine learning system. Alternatively, the "older" or historical transaction data 320 may be set as a certain number of transactions. Mixtures of the two approaches are also possible.

FIG. 3B shows how transaction data 330 for a particular transaction may be stored in numeric form for processing by one or more machine learning models. For example, in FIG. 3B, transaction data has at least fields: transaction amount, timestamp (e.g., as a Unix epoch), transaction type (e.g., card payment or direct debit), product description or identifier (i.e., relating to items being purchased), merchant identifier, issuing bank identifier, a set of characters (e.g., Unicode characters within a field of predefined character length), country identifier etc. It should be noted that a wide variety of data types and formats may be received and pre-processed into appropriate numerical representations. In certain cases, originating transaction data, such as that generated by a client device and sent to merchant server 130 is pre-processed to convert alphanumeric data types to numeric data types for the application of the one or more machine learning models. Other fields present in the transaction data can include, but are not limited to, an account number (e.g., a credit card number), a location of where the transaction is occurring, and a manner (e.g., in person, over the phone, on a website) in which the transaction is executed.

*Example Machine Learning System*

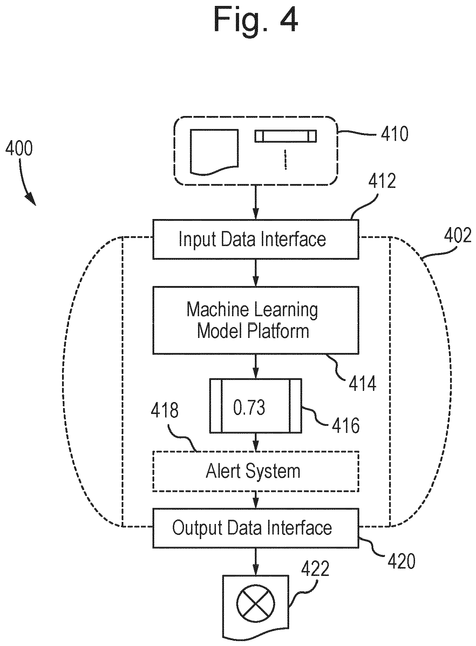

FIG. 4 shows one example 400 of a machine learning system 402 that may be used to process transaction data. Machine learning system 402 may implement one or more of machine learning systems 160 and 210. The machine learning system 402 receives input data 410. The form of the input data 410 may depend on which machine learning model is being applied by the machine learning system 402. In a case where the machine learning system 402 is configured to perform fraud or anomaly detection in relation to a transaction, e.g. a transaction in progress as described above, the input data 410 may comprise transaction data such as 330 (i.e., data forming part of a data package for the transaction) as well as data derived from historical transaction data (such as 300 in FIG. 3A) and/or data derived from ancillary data (such as 148 in FIGS. 1A to 1C or 242 in FIGS. 2A and 2B). The ancillary data may comprise secondary data linked to one or more entities identified in the primary data associated with the transaction. For example, if transaction data for a transaction in progress identifies a user, merchant and one or more banks associated with the transaction (such as an issuing bank for the user and a merchant bank), such as via unique identifiers present in the transaction data, then the ancillary data may comprise data relating to these transaction entities. The ancillary data may also comprise data derived from records of activity, such as interaction logs and/or authentication records. In one case, the ancillary data is stored in one or more static data records and is retrieved from these records based on the received transaction data. Additionally, or alternatively, the ancillary data may comprise machine learning model parameters that are retrieved based on the contents of the transaction data. For example, machine learning models may have parameters that are specific to one or more of the user, merchant and issuing bank, and these parameters may be retrieved based on which of these is identified in the transaction data. For example, one or more of users, merchants, and issuing banks may have corresponding embeddings, which may comprise retrievable or mappable tensor representations for said entities. For example, each user or merchant may have a tensor representation (e.g., a floating-point vector of size 128-1024) that may either be retrieved from a database or other data storage or may be generated by an embedding layer, e.g. based on a user or merchant index.

The input data 410 is received at an input data interface 412. The input data interface 412 may comprise an API interface, such as an internal or external API interface as described above. In one case, the payment processor server 140 as shown in FIGS. 1A to 1C makes a request to this interface, where the request payload contains the transaction data. The API interface may be defined to be agnostic as to the form of the transaction data or its source. The input data interface 412 is communicatively coupled to a machine learning model platform 414. In one case, a request made to the input data interface 412 triggers the execution of the machine learning model platform 414 using the transaction data supplied to the interface. The machine learning model platform 414 is configured as an execution environment for the application of one or more machine learning models to the input data 410. In one case, the machine learning model platform 414 is arranged as an execution wrapper for a plurality of different selectable machine learning models. For example, a machine learning model may be defined using a model definition language (e.g., similar to, or using, markup languages such as eXtended Markup Language - XML). Model definition languages may include (amongst others, independently or in combination), SQL, TensorFlow, Caffe, Thine and PyTorch. In one case, the model definition language comprises computer program code that is executable to implement one or more of training and inference of a defined machine learning model. The machine learning models may, for example, comprise, amongst others, artificial neural network architectures, ensemble models, regression models, decision trees such as random forests, graph models, and Bayesian networks. The machine learning model platform 414 may define common (i.e., shared) input and output definitions such that different machine learning models are applied in a common (i.e., shared) manner.

In the present example, the machine learning model platform 414 is configured to provide at least a single scalar output 416. This may be normalised within a predefined range, such as 0 to 1. When normalised, the scalar output 416 may be seen as a probability that a transaction associated with the input data 410 is fraudulent or anomalous. In this case, a value of "0" may represent a transaction that matches normal patterns of activity for one or more of a user, merchant and issuing bank, whereas a value of "1" may indicate that the transaction is fraudulent or anomalous, i.e. does not match expected patterns of activity (although those skilled in the art will be aware that the normalised range may differ, such as be inverted or within different bounds, and have the same functional effect). It should be noted that although a range of values may be defined as 0 to 1, output values may not be uniformly distributed within this range, for example, a value of "0.2" may be a common output for a "normal" event and a value of "0.8" may be seen as being over a threshold for a typical "anomalous" or fraudulent event. The machine learning model implemented by the machine learning platform 414 may thus implement a form of mapping between high-dimensionality input data (e.g., the transaction data and any retrieve ancillary data) and a single value output. In one case, for example, the machine learning platform 414 may be configured to receive input data for the machine learning model in a numeric format, wherein each defined machine learning model is configured to map input data defined in the same manner. The exact machine learning model that is applied by the machine learning model platform 414, and the parameters for that model, may be determined based on configuration data. The configuration data may be contained within, and/or identified using, the input data 410 and/or may be set based on one or more configuration files that are parsed by the machine learning platform 414.

In certain cases, the machine learning model platform 414 may provide additional outputs depending on the context. In certain implementations, the machine learning model platform 414 may be configured to return a "reason code" capturing a human-friendly explanation of a machine learning model's output in terms of suspicious input attributes. For example, the machine learning model platform 414 may indicate which of one or more input elements or units within an input representation influenced the model output, e.g. a combination of an "amount" channel being above a learnt threshold and a set of "merchant" elements or units (such as an embedding or index) being outside a given cluster. In cases, where the machine learning model platform 414 implements a decision tree, these additional outputs may comprise a route through the decision tree or an aggregate feature importance based on an ensemble of trees. For neural network architectures, this may comprise layer output activations and/or layer filters with positive activations.

In FIG. 4, certain implementations may comprise an optional alert system 418 that receives the scalar output 416. In other implementations, the scalar output 416 may be passed directly to an output data interface 420 without post processing. In this latter case, the scalar output 416 may be packaged into a response to an original request to the input data interface 412. In both cases, output data 422 derived from the scalar output 416 is provided as an output of the machine learning system 402. The output data 422 is returned to allow final processing of the transaction data. For example, the output data 422 may be returned to the payment processor server 140 and used as the basis of a decision to approve or decline the transaction. Depending on implementation requirements, in one case, the alert system 418 may process the scalar output 416 to return a binary value indicating whether the transaction should be approved or declined (e.g., "1" equals decline). In certain cases, a decision may be made by applying a threshold to the scalar output 416. This threshold may be context dependent. In certain cases, the alert system 418 and/or the output data interface 420 may also receive additional inputs, such as explanation data (e.g., the "reason code" discussed above) and/or the original input data. The output data interface 420 may generate an output data package for output data 422 that combines these inputs with the scalar output 416 (e.g., at least for logging and/or later review). Similar, an alert generated by the alert system 418 may include and/or be additionally based on the aforementioned additional inputs, e.g. in addition to the scalar output 416.

In a preferred implementation, the machine learning system 402 is used in an "online" mode to process a high volume of transactions within a narrowly defined time range. For example, in normal processing conditions the machine learning system 402 may process requests within 7-12ms and be able to manage 1000-2000 requests a second (these being median constraints from real-world operating conditions). However, the machine learning system 402 may also be used in an "offline" mode, e.g. by providing a selected historical transaction to the input data interface 412. In an offline mode, input data may be passed to the input data interfaces in batches (i.e., groups). The machine learning system 402 may also be able to implement machine learning models that provide a scalar output for an entity as well as, or instead of, a transaction. For example, the machine learning system 402 may receive a request associated with an identified user (e.g., a card or payment account holder) or an identified merchant and be arranged to provide a scalar output 416 indicating a likelihood that the user or merchant is fraudulent, malicious, or anomalous (i.e., a general threat or risk). For example, this may form part of a continuous or periodic monitoring process, or a one-off request (e.g., as part of an application for a service). The provision of a scalar output for a particular entity may be based on a set of transaction data up to and including a last approved transaction within a sequence of transaction data (e.g., transaction data for an entity similar to that should in FIG. 3A).

*Example Transaction Process Flow*

FIGS. 5A and 5B show two possible example transaction process flows 500 and 550. These process flows may take place in the context of the example transaction process systems 100, 102, 104 shown in FIGS. 1A to 1C as well as other systems. The process flows 500 and 550 are provided as one example of a context in which a machine learning transaction processing system may be applied, however not all transaction process flows will necessarily follow the processes shown in FIGS. 5A and 5B and process flows may change between implementations, systems and over time. The example transaction process flows 500 and 550 reflect two possible cases: a first case represented by transaction process flow 500 where a transaction is approved, and a second case represented by transaction process flow 550 where a transaction is declined. Each transaction process flow 500, 550 involves the same set of five interacting systems and devices: a POS or user device 502, a merchant system 504, a payment processor (PP) system 506, a machine learning (ML) system 508 and an issuing bank system 510. The POS or user device 502 may comprise one of the client devices 110, the merchant system 504 may comprise the merchant server 130, the payment processor system 506 may comprise the payment processor server 140, and the machine learning system 508 may comprise an implementation of the machine learning system 160, 210 and/or 402. The issuing bank system 510 may comprise one or more server devices implementing transaction functions on behalf of an issuing bank. The five interacting systems and devices 502 to 510 may be communicatively coupled by one or more internal or external communication channels, such as networks 120. In certain cases, certain ones of these systems may be combined, e.g. an issuing bank may also act as a payment processor and so systems 506 and 510 may be implemented with a common system. In other cases, a similar process flow may be performed specifically for a merchant (e.g., without involving a payment processor or issuing bank). In this case, the machine learning system 508 may communicate directly with the merchant system 504. In these variations, a general functional transaction process flow may remain similar to that described below.

The transaction process flow in both FIGS. 5A and 5B comprises a number of common (i.e., shared) processes 512 to 528. At block 512, the POS or user device 502 initiates a transaction. For a POS device, this may comprise a cashier using a front-end device to attempt to take an electronic payment; for a user device 502 this may comprise a user making an online purchase (e.g., clicking "complete" within an online basket) using a credit or debit card, or an online payment account. At block 514, the payment details are received as electronic data by the merchant system 504. At block 516, the transaction is processed by the merchant system 504 and a request is made to the payment processor system 506 to authorise the payment. At block 518, the payment processor system 506 receives the request from the merchant system 504. The request may be made over a proprietary communications channel or as a secure request over public networks (e.g., an HTTPS request over the Internet). The payment processor system 506 then makes a request to the machine learning system 508 for a score or probability for use in processing the transaction. Block 518 may additionally comprise retrieving ancillary data to combine with the transaction data that is sent as part of the request to the machine learning system 508. In other cases, the machine learning system 508 may have access to data storage devices that store ancillary data (e.g., similar to the configurations of FIGS. 2A and 2B) and so retrieve this data as part of internal operations (e.g., based on identifiers provided within the transaction data and/or as defined as part of an implemented machine learning model).

Block 520 shows a model initialisation operation that occurs prior to any requests from the payment processor system 506. For example, the model initialisation operation may comprise loading a defined machine learning model and parameters that instantiate the defined machine learning model. At block 522, the machine learning system 508 receives the request from the payment processor system 506 (e.g., via a data input interface such as 412 in FIG. 4). At block 522, the machine learning system 508 may perform any defined pre-processing prior to application of the machine learning model initialised at block 520. For example, in the case that the transaction data still retains character data, such as a merchant identified by a character string or a character transaction description, this may be converted into suitable structured numeric data (e.g., by converting string categorical data to an identifier via a look-up operation or other mapping, and/or by mapping characters or groups of characters to vector embeddings). Then at block 524 the machine learning system 506 applies the instantiated machine learning model, supplying the model with input data derived from the received request. This may comprise applying the machine learning model platform 414 as described with reference to FIG. 4. At block 526, a scalar output is generated by the instantiated machine learning model. This may be processed to determine an "approve" or "decline" binary decision at the machine learning system 508 or, in a preferred case, is returned to the payment processor system 506 as a response to the request made at block 518.

At block 528, the output of the machine learning system 508 is received by the payment processor system 506 and is used to approve or decline the transaction. FIG. 5A shows a process where the transaction is approved based on the output of the machine learning system 508; FIG. 5B shows a process where the transaction is declined based on the output of the machine learning system 508. In FIG. 5A, at block 528, the transaction is approved. Then at block 530, a request is made to the issuing bank system 532. At block 534, the issuing bank system 532 approves or declines the request. For example, the issuing bank system 532 may approve the request if an end user or card holder has sufficient funds and approval to cover the transaction cost. In certain cases, the issuing bank system 532 may apply a second level of security; however, this may not be required if the issuing bank relies on the anomaly detection performed by the payment processor using the machine learning system 508. At block 536, the authorisation from the issuing bank system 510 is returned to the payment processor system 506, which in turn sends a response to the merchant system 504 at block 538, and the merchant system 504 in turn responds to the POS or user device 502 at block 540. If the issuing bank system 510 approves the transaction at block 534, then the transaction may be completed, and a positive response returned via the merchant system 504 to the POS or user device 502. The end user may experience this as an "authorised" message on screen of the POS or user device 502. The merchant system 504 may then complete the purchase (e.g., initiate internal processing to fulfil the purchase).

At a later point in time, one or more of the merchant system 504 and the machine learning system 508 may save data relating to the transaction, e.g. as part of transaction data 146, 240 or 300 in the previous examples. This is shown at dashed blocks 542 and 544. The transaction data may be saved along with one or more of the output of the machine learning system 508 (e.g., the scalar fraud or anomaly probability) and a final result of the transaction (e.g., whether it was approved or declined). The saved data may be stored for use as training data for the machine learning models implemented by the machine learning system 508. The saved data may also be accessed as part of future iterations of block 524, e.g. may form part of future ancillary data. In certain cases, a final result or decision of the transaction may not be known at the time of the transaction. For example, a transaction may only be labelled as anomalous via later review by an analyst and/or automated system, or based on feedback from a user (e.g., when the user reports fraud or indicates that a payment card or account was compromised from a certain date). In these cases, ground truth labels for the purposes of training the machine learning system 508 may be collected over time following the transaction itself.

Turning now to the alternative process flow of FIG. 5B, in this case one or more of the machine learning system 508 and the payment processor system 506 declines the transaction based on the output of the machine learning system 508. For example, a transaction may be declined if the scalar output of the machine learning system 508 is above a retrieved threshold. At block 552, the payment processor system 506 issues a response to the merchant system 504, which is received at block 554. At block 554, the merchant system 504 undertakes steps to prevent the transaction from completing and returns an appropriate response to the POS or user device 502. This response is received at block 556 and an end user or customer may be informed that their payment has been declined, e.g. via a "Declined" message on screen. The end user or customer may be prompted to use a different payment method. Although not shown in FIG.5B, in certain cases, the issuing bank system 510 may be informed that a transaction relating to a particular account holder has been declined. The issuing bank system 510 may be informed as part of the process shown in FIG. 5B or may be informed as part of a periodic (e.g., daily) update. Although, the transaction may not become part of transaction data 146, 240 or 300 (as it was not approved), it may still be logged by at least the machine learning system 508 as indicated by block 544. For example, as for FIG. 5A, the transaction data may be saved along with the output of the machine learning system 508 (e.g., the scalar fraud or anomaly probability) and a final result of the transaction (e.g., that it was declined).

*A Privacy-Preserving Federated Learning Solution*

Motivated by large-scale event-processing systems, a federated learning framework for anomaly detection in financial payments and transaction processing is described herein. Examples provide financial crime detection tools, which can be effective for a wide range of institutions including, but not limited to, banks, payment processors and payment infrastructure providers.

As will become more apparent from the description below, examples provide a transformative, compartmentalized system, where institutions are isolated from each other in their data processing, model architecture and schema. Example systems described herein use neural architectures with fully differentiable components. Example systems described herein do not employ aggregation and pooling steps which bring about common attacks relying on shared model architectures. Instead, examples provide a setting where data owners share privacy-preserving outputs from independent and private models. Examples provide advances in data publication security, which may be built with k-anonymity, resampling and/or differential privacy techniques.

*Objectives*

Examples prohibit, or at least significantly reduce, reverse engineering of source data and models across institutions to be used for anomaly detection, while combining privacy-preserving insights from originator and beneficiary accounts. Examples also accommodate userempowerment and interoperability enhancements.

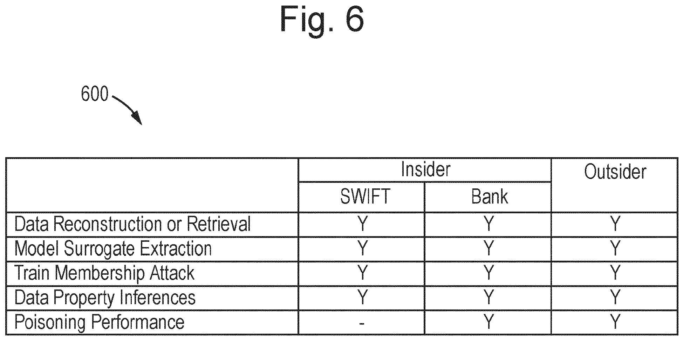

FIG. 6 is a table 600 showing example threat models. The example threat models are common threat models to which the systems and methods described herein are particularly applicable.

In all cases, attacks are defined as leaks of information outside the trusted scope of data owners. Attacks executed by malicious adversaries at training time, i.e., with access to gradient information, are considered. Protection guarantees readily extend to, or improve in, inference settings. Malicious actors may deviate from the FL protocol by modifying inputs or pipelines under their control, which is an elevated threat compared to honest-but-curious actors who observe the intended operating procedures of the system. The origin of threats is distributed across SWIFT, bank or outsider nodes.

The systems and methods described herein are designed to be resilient against at least the threats indicated with a "Y" in FIG. 6.

Poisoning attacks are by far the least serious of the attacks shown in FIG. 6 and described herein. In a poisoning attack, an insider at a processor node, which is responsible for supplying and attaching labels, could modify or generate labels prior to model training that induces certain decisioning logic in the system. For example, they could change any label pertaining to a certain type of transaction (for example, transactions from a certain country) to 'no anomaly'. Then, all such transactions would be approved.

This is, however, a general weakness of any machine learning system. The model architect could be malicious and intentionally train an ineffective model. This would equally affect a centralized model at a payment processor; one that does not make use of any private information from the banks.

This does not, however, impact privacy of the bank data in any way.

A centralized deep learning architecture will now be described, followed by a federated system, and training and inference.

*A Vanilla Recurrent Anomaly Detection Model*

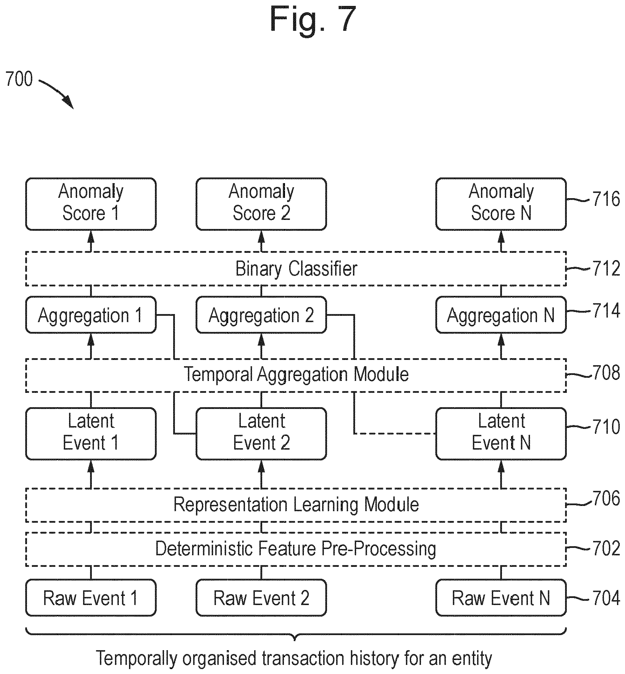

FIG. 7 shows an example vanilla recurrent architecture 700 for anomaly detection.

The recurrent anomaly detection model (or "architecture") 700 is a deep architecture tasked with procuring numerical embeddings for financial entities, such as account holders, as they engage in transacting activity. These embeddings offer a representation of an entity's customary transacting behaviour, which is aggregated over time and is meaningful in the context of an anomaly detection classifier. Sudden changes in behaviour, entity resolution failures and/or flags associated with bank accounts are encoded numerically and can suggest a higher prevalence of unusual activity.

In its simplest form, a recurrent model as displayed in FIG. 7 comprises four blocks (or "layers" or "modules").

In this example, the architecture 700 comprises a deterministic input pre-processing layer 702. This layer 702 takes temporally organized data 704 for an entity, produces features and yields numerically formatted and normalized values suitable for training and inference.

In this example, the architecture 700 also comprises a representation learning block 706 on individual transactions. This block 706 is responsible for discovering numerical representations relevant for financial crime detection.

In this example, the architecture 700 also comprises a stateful temporal aggregation layer 708. This layer 708 is responsible for the accumulation of signals and customary transacting behaviour 710 for an entity over time.

In this example, the architecture 700 also comprises a stateless binary classifier 712 that maps aggregated histories of transactional data 714 into anomaly scores 716 representative of financial crime prevalence. In this example, the anomaly scores 716 are numeric scores from 0 to 1.

The model 700 takes, as input, a centralized data set.

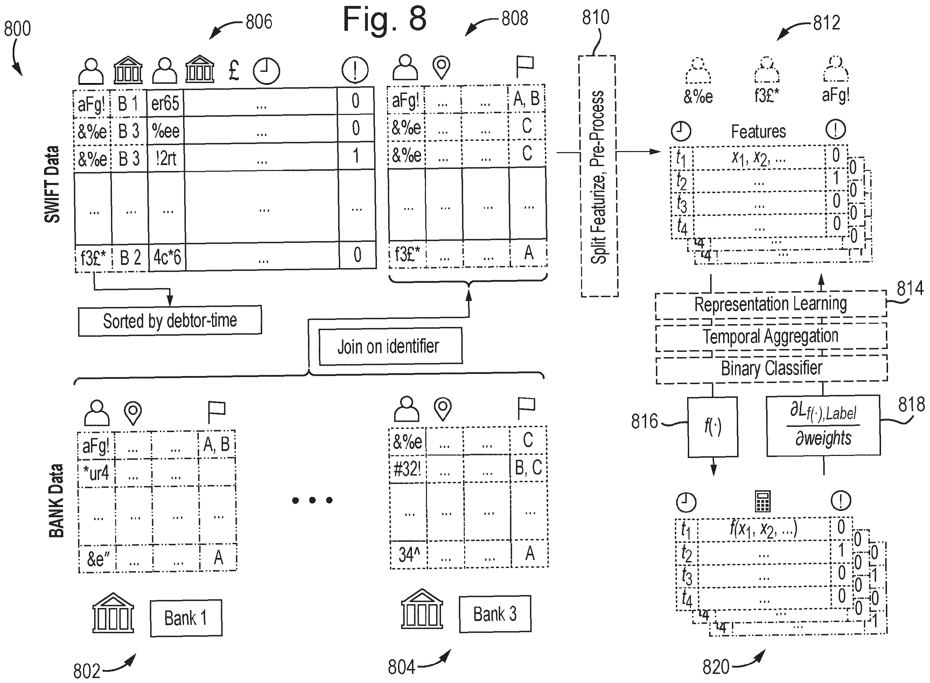

Operations 800 of the model 700 at train time are shown in FIG. 8.

In particular, FIG. 8 shows an example data journey 800 at training time in a centralized anomaly modelling setting.

Here, originator and beneficiary data 802, 804 is joined to SWIFT transactions 806 on account identifiers 802, resulting in pooled data 808. The pooled data 808 is ordered, featurised and split 810 by originator entities. This forms sequentially organized sequences 812 focused on a scope; the originator. The procedure follows standard machine learning routines, where sequences 812 are fed through a recurrent model 814, a cost function 816 is evaluated, and gradients 818 are propagated to update model parameters 820 until convergence in performance is achieved.

Good neural models are developed through careful design of pre-processing and temporal aggregation modules. Representation learning layers and treatment of categorical data must be suitable for automated entity resolution and feature engineering. Implementation relies on event streaming platforms, message queues and synchronous APIs. Pipelines, for example behavioural recurrent models that may be used in accordance with examples described herein, process over 1000 transactions per second and simultaneously aggregate histories over 10 million accounts. Examples described herein may focus on privacy preservation. As such, low-complexity processes for a vanilla model may be built, and off-the-shelf long short-term memory (LSTM) layers may be leveraged for temporal aggregation.

In terms of threats in a centralized setting, a centralized setting places trust in an orchestrator node, which ingests raw data in banks and SWIFT. This creates security flaws. Most worryingly, malicious or honest-but-curious actors within such a setting can retrieve personal details, i.e., individual data retrieval, and derive accurate statistical insights at a bank population level, i.e., exploration and property inference.

*A Privacy-Preserving Federated Model Architecture*

The above-described model can be transformed into a compartmentalised system; trained in an orchestrated setting used in collaborative learning applications. To that end, examples decompose the data journey into interdependent heterogeneous parts, which distribute compute across nodes and avoid, or at least significantly reduce, parameter pooling.

Examples may, therefore, approximate the centralized data journey shown in FIG. 8 using embedded account representations, and in a privacy-preserving and differentiable manner.

For simplicity and ease of explanation, in examples, SWIFT takes orchestrator responsibilities. However, this may be externalised in other examples.

In examples described herein, pre-processing and learning of account insights are the responsibility of bank nodes. Additionally, in examples, a SWIFT node joins originator and beneficiary account insights, compares them, trains a recurrent model and securely backpropagates training signals to bank nodes.

In terms of bank models, in examples, each bank owns a private model, with a private architecture and/or schema only known to itself. This produces a standardized, pseudo-randomized output, typically referred to herein as an "account embedding". SWIFT can use the account embedding for the estimation of financial crime prevalence.

Example settings described herein feature a hybrid approach to privacy, using a protective architecture against extraction, inference and membership attacks. These often require background data knowledge, access to model APIs or labels. Examples combine this with data publication security across nodes through a range of mechanisms such as k-anonymity, de-identification and/or local differential privacy (LDP). This offers strong data security and other guarantees in a distributed system. Account-level privacy is provided, even where anomaly detection proceeds through queries of information in individual accounts. Examples described herein offer plausible deniability to account holders.

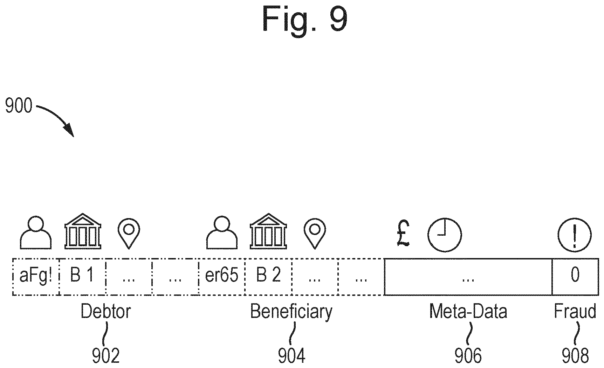

FIG. 9 shows example transaction data 900.

The example transaction data 900 includes originator (or "debtor" or "creditor") and beneficiary information 902, 904, as well as metadata 906 and anomaly labels 908. Examples of metadata 906 include, but are not limited to, monetary amounts and transaction times. The transaction data 900 may comprise different data in other examples.

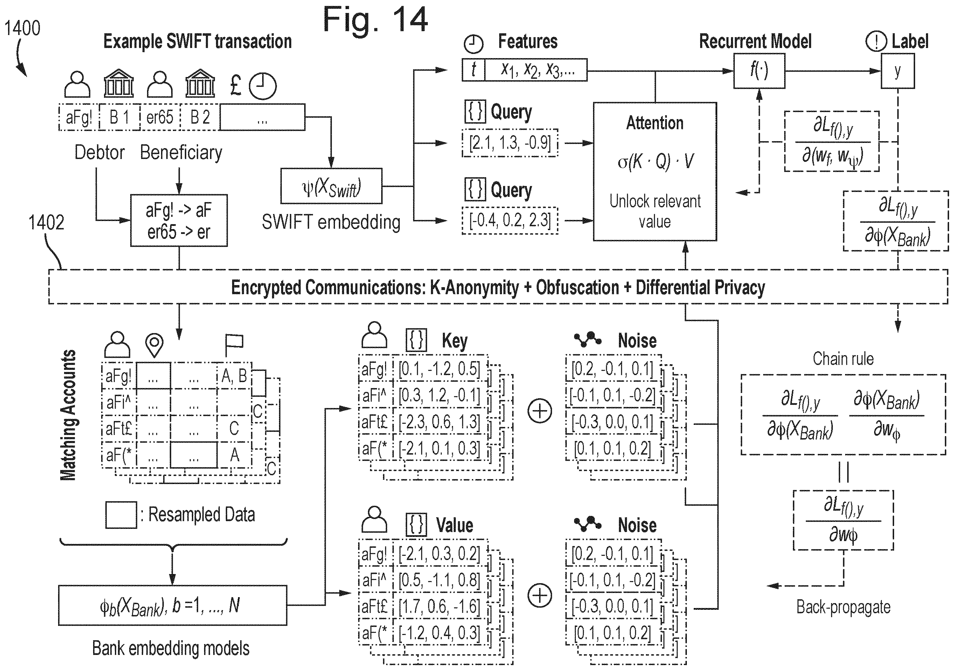

An overview of an example data journey for an example SWIFT transaction (of which the transaction data 900 is depicted in FIG. 9) will be provided below. The journey is split in two parts; an inferential stage for anomaly estimations, and a backward update (or "back-propagation") stage, relevant for training. A full example architecture is shown in FIG. 14 and will be described in more detail below.

*Forward Inference - Privately Retrieve Originator And Beneficiary Insights*

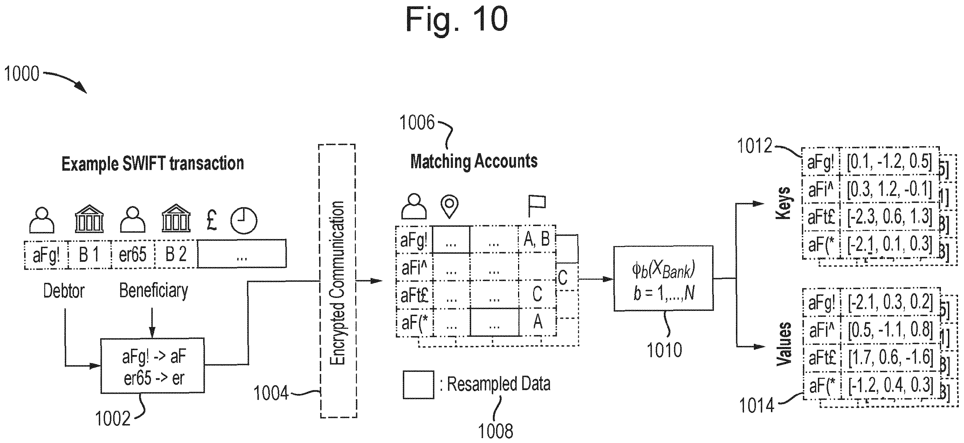

FIG. 10 shows an example procedure 1000 to query key and value pairs from account identifiers.

First, hashed account IDs are cropped, encrypted and sent to relevant banks, as shown by items 1002 and 1004 in FIG. 10. Each bank, agreeing the use of a hashing algorithm with SWIFT, retrieves records for accounts 1006 with matching hashes and is unaware of the identity of the account queried. Account data may be partially resampled 1008.

Resampling may take various different forms. In this example, resampling comprises substituting one data item in the matching account data 1006 with another. This may result in some of the account information of one customer being switched or shuffled with that of another customer. This represents a trade-off between privacy and downstream model accuracy. An embedding that is based on resampled data may be referred to as a "resampled embedding".

Account data may be stripped of identifiers and features outside a preferred schema at each institution. This is finally processed using private differentiable models 1010 in each bank. This yields key-value embedding pairs 1012, 1014 for processing in a neural attention mechanism. An example neural attention mechanism will be described in more detail below.

The key embeddings 1012 help SWIFT identify the target account holder. The value embeddings 1014 represent obfuscated de-identified account profiles, with learnt features for anomaly detection.

In examples, embeddings comply with an agreed dimensionality and encode statistical properties as instructed by SWIFT, or an external orchestrator.

In examples, a bank is free to choose, privately, the data and model leveraged to produce account embeddings, according to their capabilities and/or preferences.

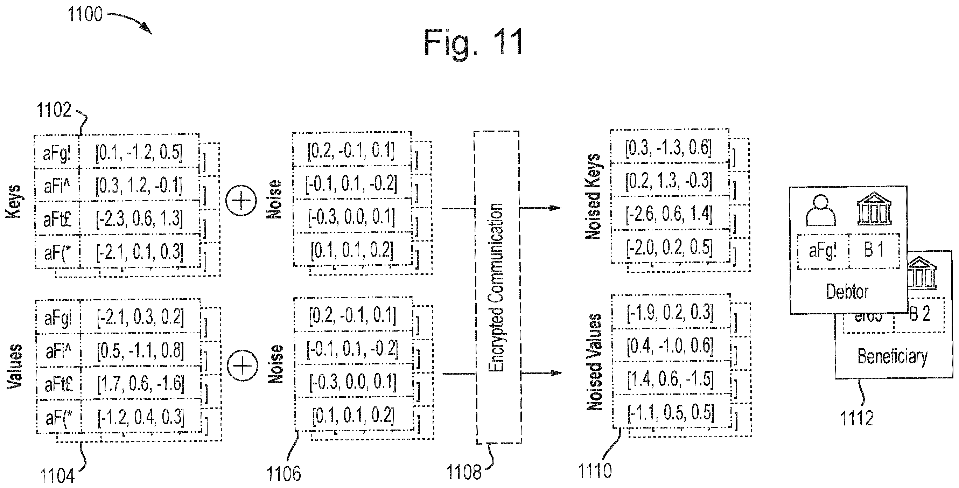

FIG. 11 shows an example procedure 1100 to noise and return account embeddings to a payment processor server.

In examples, key and value vectors 1102, 1104 (which, in this example, correspond to the key-value embedding pairs 1012, 1014 described above with reference to FIG, 10) are noised 1106 through a differentiable reparameterization procedure, encrypted 1108 and returned to SWIFT as noised embeddings 1110 without identifiers 1112, as shown in FIG. 11. For example, the communication protocol between SWIFT and the financial institution(s) may attach a unique request ID to each request. This enables requests to be treated as API calls without requiring the hashed and cropped IDs. An embedding that is based on noised data may be referred to as a "noised embedding".

In this example, the same noise 1106 is applied to both the key and value vectors 1102, 1104. In other examples, different noise 1106 may be used.

In this specific example, key and value vectors 1102, 1104 and an account embedding comprises the key and value vectors 1102, 1104. The key and value vectors 1102, 1104 can be used by an attention mechanism as will be described in more detail below. However, in other examples, an account embedding does not comprise key and value vectors, for example where an attention mechanism is not used.

Thus, variants of k-anonymity, i.e. cropped hashes, feature resampling, i.e. randomized response, and/or differential privacy, i.e. embedding noise, may be endowed prior to data publication. Privacy is hard to compromise for raw data that never enters the machine learning pipelines. A challenge is nevertheless to find a good trade-off between privacy and model utility in downstream anomaly detection tasks.

Regarding LDP, output noise is an alternative to objective and gradient perturbations, carried with Laplace or Gaussian mechanisms. Output noise involves clipping relevant embedding norms, thus bounding the sensitivity of the randomized obfuscation models. This allows simplified accounting for worst-case data-leak scenarios and approximating a privacy budget through relevant privacy loss distributions.

In terms of resampling, resampling is a randomized response technique applied over individual features. Resampling shares similarities with frequency oracles and works when feature domains are small with respect to data size. Resampling creates complexities for privacy budget accountancy.

LDP works best on regularized models that are not overly dependent on small changes in individual features. Often, multiple privacy mechanisms are tested for data publication, and one that yields best utility is selected. Combined approaches increase the complexity of privacy budget accountancy. In examples described herein, LDP may be applied as a step on top of privacy-preserving mechanisms that leverage a compartmentalised machine learning pipeline. Thus, budget estimations for LDP are not indicative of the real protection achieved. This can, however, be evaluated against threat models adversarially.

In practice, and as will be described in more detail below, account data publication queries may be limited within the model training logic to avoid harsh sequential budget composition penalties. Moreover, noise is produced deterministically at inference-time, effectively imposing a single query limit per account.

*Forward Inference - Unlocking Relevant Originator And Beneficiary Insights*

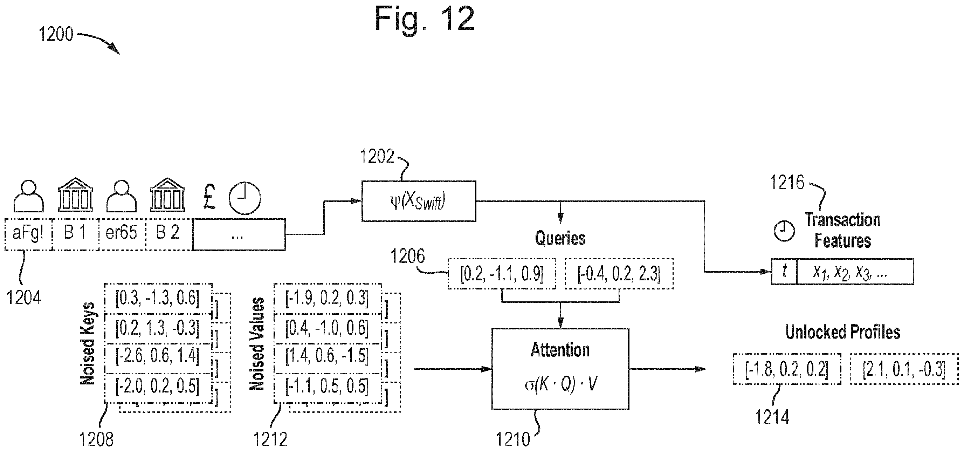

FIG. 12 shows an example procedure 1200 to unlock relevant account data from financial institutions.

In this example, SWIFT retrieves embedding vectors for originator and beneficiary accounts. For this, a private (SWIFT) model 1202 ingests transaction data 1204, including any account information within, and produces query embeddings 1206, to be combined with (noised) key embeddings 1208 in an attention layer 1210. This offers a weighted fuzzy match of relevant accounts. SWIFT also retrieves the corresponding (noised) value embeddings 1212. However, as explained above, in some examples an attention layer 1210 is not used, for example where k-anonymity is not used.

Similarities between details held across transaction and bank data help identify the relevant accounts. If no match exists or an evasion attack is underway, attention scores will exhibit high uncertainty. The process is never exact; an unlocked profile 1214 contains a weighted average of all value vectors returned by the bank.

In addition, SWIFT further produces a set of features 1216 from the raw transaction data 1204. This complements the embedded profiles 1214 and feeds into a recurrent anomaly detection model (not shown in FIG. 12). In particular, the transaction features 1216 and unlocked profiles 1214 are evaluated with a recurrent model, in the context of the originator's history, as will now be described.

*Forward Inference - Producing Anomaly Scores*

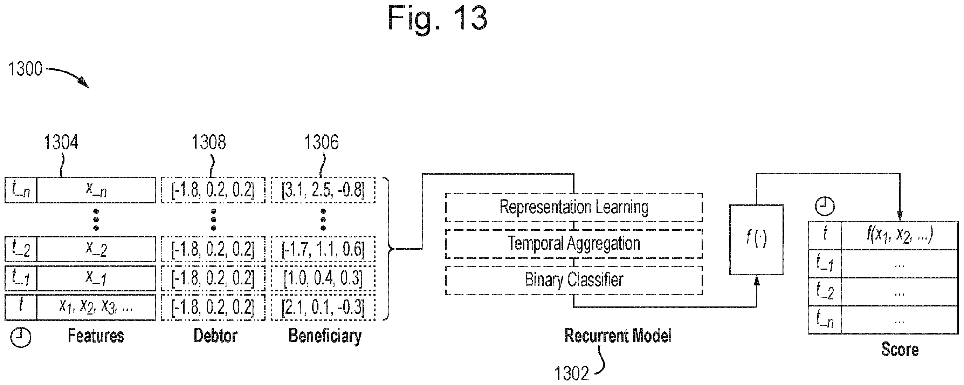

FIG. 13 shows an example procedure 1300 to feed profiles and features into a recurrent model 1302.

In this example, the recurrent model 1302 takes, as input, transaction data 1304 and beneficiary accounts 1306 involved in the last n transactions for this originator 1308. All of the aggregated recurrent profiles may be stored up-to-date in the orchestrator. Hence, each transaction does not require any bank account information related to historical transactions to be sourced. This may reduce latency and/or improve data security.

*Backward Propagation - Updating SWIFT Model Parameters*

For model updates, anomaly predictions and labels in training data help procure a crossentropy loss function for binary classification. Updating parameters in models executed by SWIFT is carried through gradient descent. The following is updated across weights in the recurrent model $f(\cdot)$ and feature/query module $\psi(\cdot)$:

$$\left(w_f,\ w_\psi\right)\ \leftarrow\ \left(w_f,\ w_\psi\right) - \lambda_{Swift} \times \frac{dL_{f(\cdot),\,Label}}{d\left(w_f,\ w_\psi\right)}$$

The process is self-contained within a SWIFT node. As such, the above gradients, model parameters and architecture details do not transcend its trusted domain. The learning rate, $\lambda_{Swift}$, is independent of any updates in private bank models.

*Backward Propagation - Updating Individual Bank Models*

The gradients of the loss function with respect to bank embedding model parameters are used in per-bank private key/value embedding models, $\phi_{b=1,...,N}(\cdot)$. In examples, these models do not have shared architectures. The target parameter update is as follows for each banking institution:

$$w_\phi\ \leftarrow\ w_\phi - \lambda_{Bank} \times \frac{dL_{f(\cdot),\,Label}}{dw_\phi}$$

Directly back-propagating this gradient from SWIFT to banks would involve centralized access to the full data pipeline. However, in accordance with examples, the operation is decomposed to preserve data, model and schema privacy.

SWIFT offers a bank the loss function derivative with respect to private key and value embeddings, for all matching user accounts: $dL_{f(\cdot),Label}/d\phi(\cdot)$.

Through a reparameterization operation, banks are informed of all changes to output embeddings and their private models $\phi(\cdot)$. Banks can use the chain rule to produce the original gradient update without direct access to (SWIFT) labels:

$$\frac{dL_{f(\cdot),\,Label}}{dw_\phi} = \frac{dL_{f(\cdot),\,Label}}{d\phi(\cdot)}\ \frac{d\phi(\cdot)}{dw_\phi}$$

Thus, a bank may obtain derivatives of the cost function with respect to parameters in its private model. This happens without the bank having access to ground truth labels, architecture, data or schema in SWIFT or in other banks.

Gradients returned from an orchestrator to each bank can also be endowed with differential privacy. This may be performed in differentially private stochastic gradient descent. However, the architecture described herein provides that malicious actors in banks lack access to inputs, outputs, labels and background information in the orchestrator setting. Thus, in examples, no noise is added to gradients (for back-propagation) to procure better model utility.

FIG. 14 shows, by way of a summary, an example of a complete heterogenous compartmentalized federated model architecture 1400 and depicts a full example data journey and back-propagation path.

By way of a summary, FIG. 14 shows a full federated learning architecture 1400 in accordance with examples, including inference time operations (solid arrows) and training time operations (dashed arrows). Operations above the encrypted communications box 1402 occur on a payment decisioning node. Operations below the encrypted communications box 1402 occur on the bank nodes. In examples, all communications are obfuscated, differentially private and k-anonymised. SWIFT here refers to a payment processor. In this specific example, the payment decisioning node is a central node, separate from the banks. Another example architecture will be described below in which payment decisioning is performed in a bank node.

In this example, the architecture 1400 generates a transaction decision (based on the label) for a transaction using an account embedding (sent from the bank) and transaction data associated with the transaction.

*Worked Example*

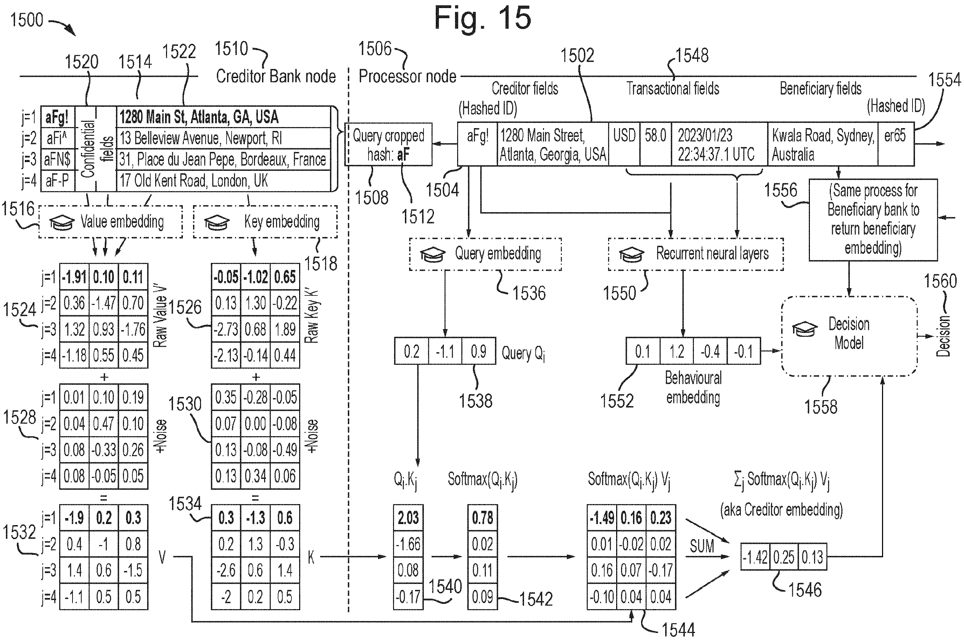

FIG. 15 shows a worked example of a data journey in an example federated learning system 1500. The values shown in FIG. 15 are merely to aid an understanding of the present disclosure and should not be understood to be by way of limitation.

Transaction data 1502 comprises an identifier 1504 associated with the creditor. As explained above, a creditor may also be referred to as a debtor. In this example, the identifier 1504 is a hashed creditor ID, namely "aFg! ". In particular, in this example, the creditor has a creditor ID (not shown), which is hashed to create the (hashed) identifier 1504. A processor node 1506 transmits a query 1508 to a creditor bank node 1510. In this example, the query 1508 comprises a cropped (or "truncated") version 1512 of the hashed creditor ID 1504, namely "aF".

The creditor bank node 1510 identifies a set of IDs that match the cropped and hashed creditor ID 1512. The set of IDs comprises the hashed creditor ID 1504, namely "aFg!", along with other matching IDs, namely "aFi^", "aFN$" and "aF-P". These other IDs match the cropped and hashed creditor ID 1512 because their first two characters are "aF".

The creditor bank node 1510 retrieves account information 1514 for each of the matching accounts.

The creditor bank node 1510 uses the retrieved account information 1514 as an input to a value embedding architecture 1516 and as an input to a key embedding architecture 1518. In this example, the value embedding architecture 1516 takes one or more confidential fields 1520 and an address field 1522 as inputs. In this example, the key embedding architecture 1518 takes the address field 1522 as input. The value embedding architecture 1516 and/or the key embedding architecture 1518 may also take a name field (not shown) as input.

As such, the key embedding architecture 1518 may perform a fuzzy match based on the name and address fields. The value embedding architecture 1516 may use the same fields, alongside other confidential fields. Examples of such confidential fields include, but are not limited to, age of account, line of business, risk flags and status indicators. Those other confidential fields may not provide utility to the key embedding architecture 1518 for fuzzy matching, but may provide utility for downstream fraud prediction.

The output of the value and key embedding architectures 1516, 1518 is raw value and raw key embeddings 1524, 1526. Noise data 1528 is applied (for example, added) to the raw value embedding 1524, and noise data 1530 is applied (for example, added) to the raw key embedding 1526. In this example, the noise data 1528 applied to the raw value embedding 1524 is different from the noise data 1530 is applied to the raw key embedding 1526. This results in noised value and key embeddings 1532, 1534.

It will be understood that the value and key embedding architectures 1516, 1518 transform their input (in this example, the retrieved account information 1514) into a different output (in this example, the raw value and raw key embeddings 1524, 1526). As such, the output of the value and key embedding architectures 1516, 1518 is different from the input to the value and key embedding architectures 1516, 1518. This applies to other models and architectures described herein.

The creditor bank node 1510 transmits the noised value and key embeddings 1532, 1534 to the processor node 1506. In this example, the noised value and key embeddings 1532, 1534 are transmitted as an account embedding. An account embedding may also be referred to as an "embedded account representation" or the like.

The payment processor node 1506 uses the hashed creditor ID 1504 (but not the cropped and hashed creditor ID 1512) as an input to a query embedding architecture 1536. The output of the query embedding architecture 1536 is a query embedding 1538.

In this example, the processor node 1506 uses an attention mechanism (not shown) to calculate the scalar product of the noised key embedding 1534 and the query embedding 1538. The result 1540 is input to a softmax function. The scalar product of the output 1542 of the softmax function and the noised value embedding 1532 is calculated. The result 1544 of the calculation is summed on a per-column basis to produce a creditor embedding 1546. As such, the creditor embedding 1546 is, in this example, the output of the attention mechanism.

Additionally, the processor node 1506 uses the hashed creditor ID 1504 and transaction feature data 1548 from the transaction data 1502 as inputs to recurrent neural layers 1550. The output of the recurrent neural layers 1550 is a behavioural embedding 1552. In this example, the transaction feature data comprises transactional fields. Transactional fields may also be referred to as "transaction features" or the like.

The processor node 1506 follows a corresponding procedure with a beneficiary bank node, using a hashed beneficiary ID 1554 in the transaction data 1502, as indicated by item 1556. This procedure results in a beneficiary embedding (not shown).

The processor node 1506 uses the creditor embedding 1546, the behavioural embedding 1552, and the beneficiary embedding (not shown) as inputs to a decision model 1558. This results in a transaction decision 1560.

In this example, separate value and key embedding architectures 1516, 1518 are shown for creating the raw value and key embeddings 1524, 1526 respectively. However, a single embedding architecture may be used to create the raw value and key embeddings 1524, 1526 in other examples.

As such, in this example, the system 1500 generates a transaction decision 1560 for a transaction using an account embedding 1546 and transaction data 1502 associated with the transaction.

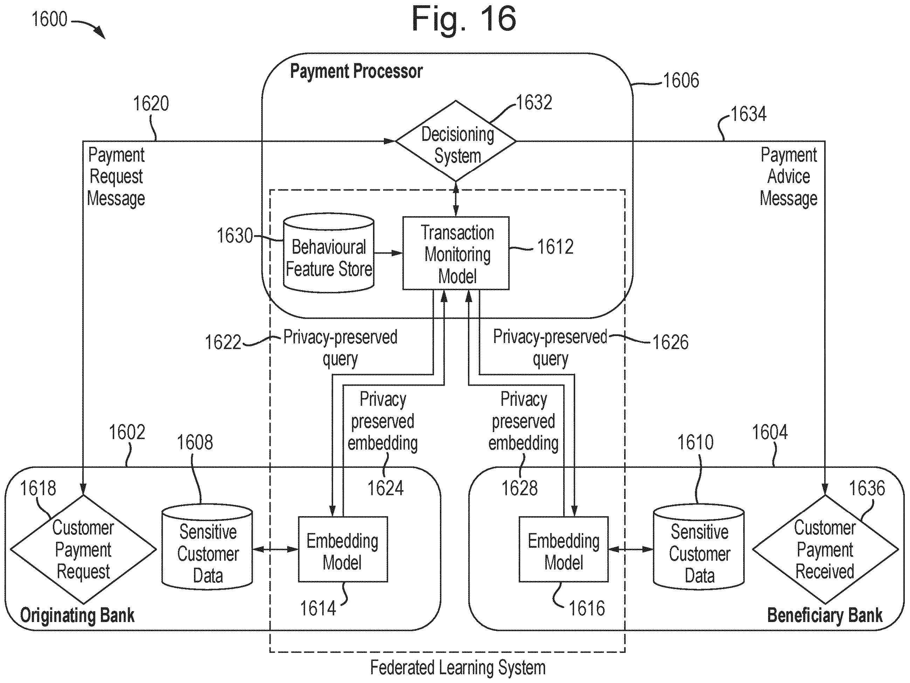

FIG. 16 shows an example of a privacy-preserving collaborative anomaly detection system 1600 within the context of a payment processing network.

A payment concerns two banks; the originator 1602 and the beneficiary 1604. In this example, the banks 1602, 1604 are connected by a payment processor 1606. The payment processor 1606 sees all the payments between participating banks. The banks 1602, 1604 possess private data 1608, 1610 pertaining to the individuals whose accounts will send or receive the payment. This data 1608, 1610 may include personally identifiable information such as name, address, and/or occupation/line of business details, as well as account management data such as time since account opening or suspicious activity flags. Co-training a central transaction monitoring model 1612 and the collection of independent embedding models 1614, 1616 allows for relevant risk indicators to be encoded as embeddings. Privacy-preserving techniques are layered on top of this to provide guarantees of customer privacy. The output anomaly score from the central transaction monitoring model is thresholded. Payments with scores beneath the threshold are processed automatically. Payments with scores at or above the threshold are blocked and referred for manual analysis by investigators.

In more detail, a customer of the originating bank 1602 initiates a customer payment request 1618. This results in a payment request message 1620 being transmitted from the originating bank 1602 to the payment processor 1606.

In response to the payment request message 1620, the payment processor 1606 transmits a privacy-preserved query 1622 to the originating bank 1602. The privacy-preserved query 1622 may be privacy-preserved in that it uses k-anonymity as described herein.

In response to the privacy-preserved query 1622, the originating bank 1602 retrieves sensitive customer data 1608. The sensitive customer data 1608 comprises account data of the customer. In examples, the sensitive customer data 1608 also comprises account data of at least one other customer of the originating bank 1602. The at least one other customer of the originating bank 1602 may or may not be a party to the payment request.

The originating bank 1602 uses the sensitive customer data 1608 as input to an originating bank private embedding model 1614. The originating bank 1602 may resample the sensitive customer data 1608 prior to inputting the sensitive customer data 1608 to the originating bank private embedding model 1614. The originating bank private embedding model 1614 outputs key and value embeddings. In examples, the key and value embeddings are based not only on sensitive customer data of the customer that is party to the payment request, but also on sensitive customer data of at least one other customer of the originating bank 1602 that is not a party to the payment request.

The originating bank 1602 may noise the key and value embeddings to created noised key and value embeddings.

The originating bank 1602 transmits a privacy-preserved embedding 1624 to the payment processor 1606. The privacy-preserved embedding 1624 may be privacy-preserved in that it leverages k-anonymity, that it is based on resampled account data and/or that it comprises noised embeddings. More generally, the privacy-preserved embedding 1624 may be privacy-preserved in that it represents the numeric outputs of a private model whose architecture and/or parameters are known only by the originating bank 1602.

The payment processor 1606 similarly transmits a privacy-preserved query 1626 to the beneficiary bank 1604 and receives a privacy-preserved embedding 1628 from the beneficiary bank 1604. However, the privacy-preserved query and embedding 1626, 1628 relate to the beneficiary rather than to the originator.

The payment processor 1606 uses the privacy-preserved embeddings 1624, 1628 and behavioural data from a behavioural feature store 1630 as inputs to the transaction monitoring model 1612.

A decisioning system 1632 derives a payment decision based on the payment request message 1620 and an output of the transaction monitoring model 1612. In this example, the payment decision is that the payment request is authorised. The payment processor transmits a payment advice message 1634 to the beneficiary bank 1604 and the customer payment is received 1636.

*Example Implementation*

An example will now be provided, which adapts the above-described general federated framework to analyse a specific example financial transaction dataset.

*Centralized Model*

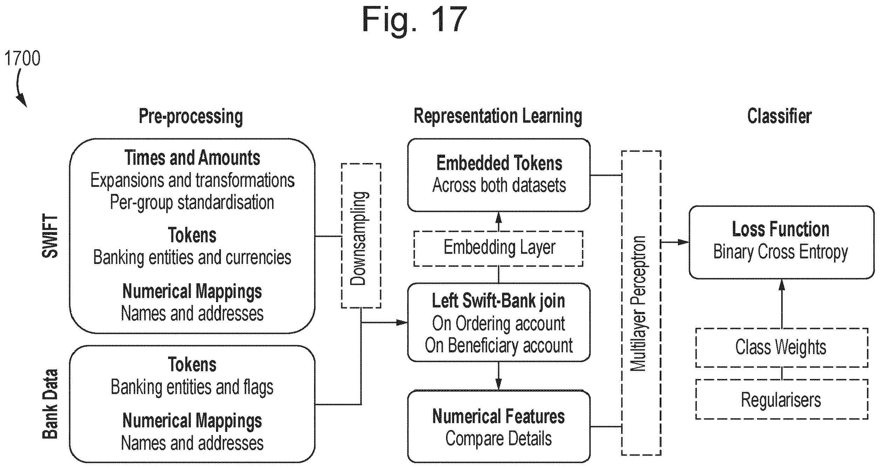

FIG. 17 shows example centralized modelling stages 1700.

Firstly, this example follows the above-described centralized anomaly detection approach. However, it does not use recurrent temporal aggregation module. The data does not exhibit temporal trends scoped on accounts. An example procedure during training time is shown in FIG. 17.

Pre-processing and feature engineering modules are independent for each node, and leverage Fourier transforms, numerical transformations and deterministic mappings which transform character strings into numerical vectors. The outputs are combined allowing numerical representations of account details to be compared, with the aim of identifying misrepresentations across nodes. Prior to this, SWIFT transactions are down-sampled at a 50-to-1 genuine versus anomalous rate.

Tokens for banks, currencies and flags are processed through a learnable embedding layer. All available features are finally ingested by a learnable multilayer perceptron.

In terms of regularisation, all embeddings are subjected to Gaussian priors through L2 penalties. The classifier is further endowed with dropout regularisation.

In terms of training regime, a weighted loss is used to achieve a 1-to-1 genuine versus fraud balance when informing gradients. All updates are undertaken using an ADAM optimiser.

In terms of this centralized model as a benchmark, the model relies on comparisons of account details held across different nodes, as well as feature engineering modules private to each independent data owner. Pre-processing, representation learning, and classifier layers share configuration details with those described below in the federated setting. Thus, this offers a good benchmark for the evaluation of predictive performance in a federated model counterpart.

*Federated Model*

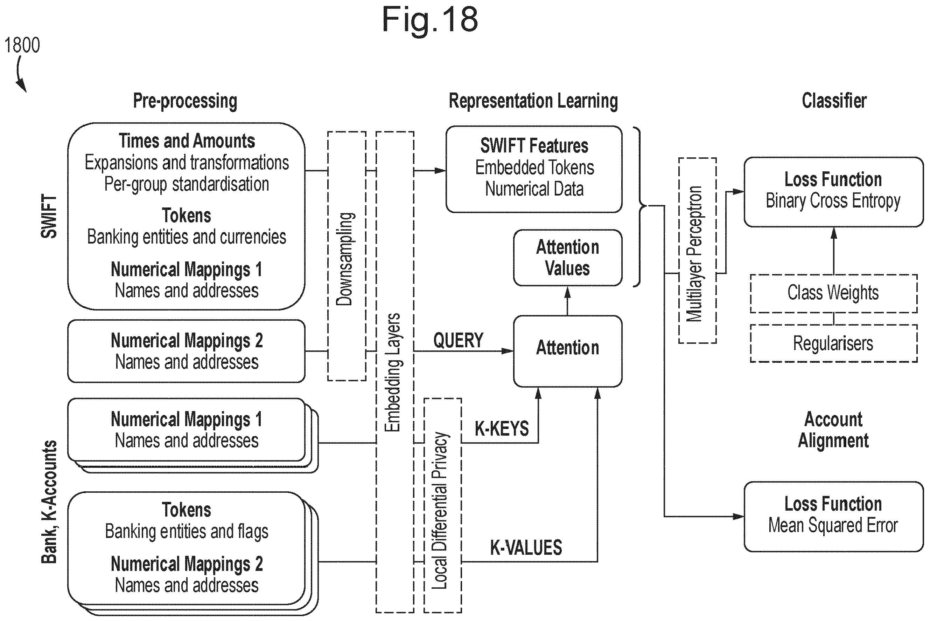

FIG. 18 shows example federated modelling stages 1800.

The above-described centralized model is modified according to the example federated architecture described above with reference to FIG. 14. In this example, SWIFT and bank nodes are clients communicating through an orchestrated training strategy. Hyper-parameters for downsampling, loss weighting, regularisation and optimiser choices remain unchanged when compared to the centralized model. A summary of the federated model procedure 1800 during training time is shown in FIG. 18.

Pre-processing and feature engineering modules are independent for each node, and are identical to those in the centralized counterpart. For each ordering and beneficiary account in a transaction. Anonymized learnable key and value vectors are requested for a set of matching accounts. This is performed according to hashing, cropping and/or k-anonymity rules described herein. A learnable query unlocks relevant bank data, which is joined to SWIFT features and used for anomaly detection.

In terms of alignment and comparison of account details, an alignment loss is leveraged to help the attention module filter value features for the relevant accounts when anomaly labels are sparse. This minimises a reconstruction loss of the numerical mappings of names and/or addresses held at banks. It is neither feasible nor desirable to achieve a good reconstruction, due to privacy guarantees. However, this allows for statistically meaningful comparisons of mismatched details.

In terms of hash cropping and k-anonymity, account IDs are hashed into long binary identifiers and cropped at a length determined by SWIFT. This may be based on the total number of observed unique accounts and the desired anonymity level. The cropping and seed for hashing is communicated to banks to replicate the process. After cropping, multiple bank accounts are randomly assigned with each identifier, which is the basis for k-Anonymity. Specifically, all n IDs are bucketed into groups of approximately k unique identifiers, with a standard deviation of $\sqrt{k(1 - k/n)}$.

In this example, upon each request, a randomly selected total of $4 \cdot k$ account matches is returned for a hash. This ensures that the target account is not readily identifiable, and it is a conservative approach. In practice, a few buckets will include accounts exceeding this boundary. In such cases, there is a small probability that the real embedding for an account is not published upon request, proportional to the number of excess accounts.

In terms of LDP, when added, key and value embeddings from k-matching accounts are produced by randomised mechanisms applied to multidimensional outputs. Such mechanisms include, but are not limited to:

$$M(x) = \phi(x) + L(0, I \cdot \Delta_1 \phi/\varepsilon), \text{ or} \qquad (Laplace)$$

$$M(x) = \phi(x) + \mathcal{N}(0, I \cdot 2 \cdot \Delta_2^2 \phi \cdot \ln(1.25\delta)/\varepsilon) \qquad (Gaussian)$$

Here, $\varepsilon, \delta$ denote budgeting parameters for privacy, and $\Delta_p \phi = \max_{x,x'} \| \phi(x) - \phi(x') \|_p$ is the p-sensitivity of the embedding model. This offers $\varepsilon$ - DP and $(\varepsilon, \delta)$ - DP guarantees per account query. During training, an average of 1.33 queries per account and training epoch may be achieved, which varies based on the transacting frequency of an entity. Due to repetition, guarantees diminish according to (advanced) composition rules; increasing budgeting at an approximate order of $1.33 \cdot E \cdot \varepsilon$ (*Laplace*) and $\sqrt{1.33 \cdot E} \cdot \varepsilon$, $1.33 \cdot E \cdot \delta$ (*Gaussian*), where E denotes the epochs run.

In terms of total budget consumption, example experiments account for the total budget consumption. The sensitivity of the embedding mechanism $\phi$ is controlled through clipping of its outputs, providing a maximum p-norm. Due to constraints on the flexibility of $\varepsilon$, $\delta$ in a Gaussian mechanism, the Laplace method is leveraged to explore a use case with moderate guarantees.

In terms of attention entropy and randomised responses, a low privacy budget is associated with high noise in differential privacy procedures. This creates wildly dispersed key representations for each account query in a k-group. Consequently, an attention mechanism for value retrieval as described above yields low-entropy attention scores, as identified in experimental results. In practice, a single random account in a k-group aligns best with the relevant query, and the remainder are ignored. The consequence is randomised responses; an effective LDP technique.

In terms of inference time query limits, noise is random during train-time, but deterministic at inference time. This effectively imposes a single query limit on account data publication.

*Alternative Architectures*

In examples described above, a payment decisioning server is implemented by a payment processor, which communicates with one or more financial institutions.

In another example, the payment decisioning server is implemented by a financial institution. In a specific example, a customer of the financial institution is a party to a transaction in relation to which a payment decision is to be made.

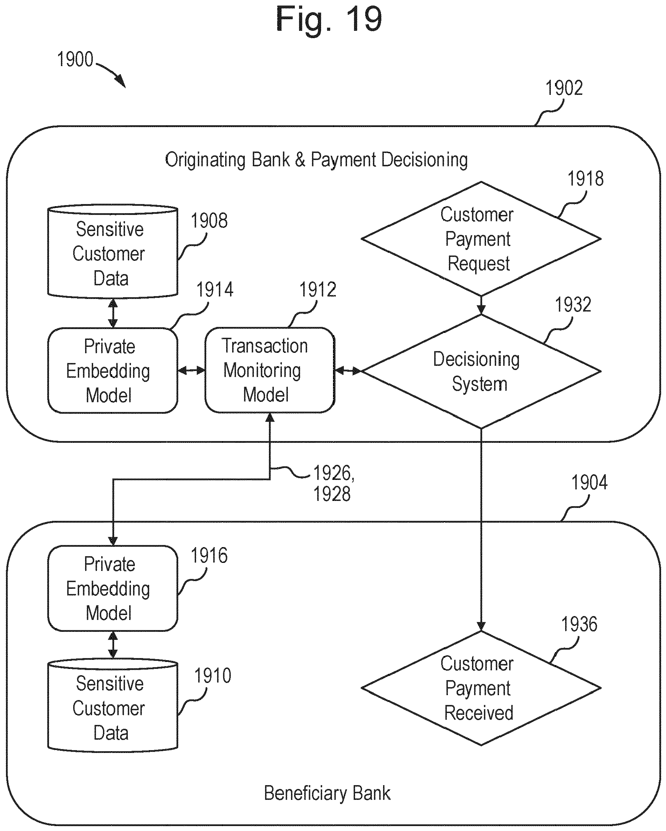

In this connection, FIG. 19 shows another example of a privacy-preserving collaborative anomaly detection system 1900 within the context of a payment processing network.

The example system 1900 shown in FIG. 19 includes some elements in common with the example system 1600 described above with reference to FIG. 16.

However, whereas in the example system 1600 payment decisioning is implemented at a payment processor 1606, in the example system 1900 payment decisioning is implemented at the originating bank 1902.

In more detail, in the example system 1900, sensitive customer data 1908 is input to a private embedding model 1914 at the originating bank 1902. Embeddings output by the private embedding model 1914 are input to a transaction monitoring model 1912.

In addition, the originating bank 1902 sends a privacy-preserved query 1926 to the beneficiary bank 1904. The beneficiary bank 1904 inputs sensitive customer data 1910 to a private embedding model 1916 at the beneficiary bank 1904. The beneficiary bank 1904 sends a privacy-preserved embedding 1928 comprising embeddings output by the private embedding model to the originating bank 1902.

The transaction monitoring model 1912 also receives the embeddings output by the beneficiary bank 1904 as an input. An output of the transaction monitoring model 1912 is provided, along with information from the customer payment request 1918, as an input to a decisioning system 1932. In this example, the decisioning system 1932 approves the payment request and the customer payment is received 1936 at the beneficiary bank 1904 accordingly.

In this example, both the transaction monitoring model 1912 and the decisioning system 1932 are implemented at the originating bank 1902, as opposed to being implemented at a payment processor.

Although not shown in FIG. 19, in some examples, originating banks have the same transaction monitoring model 1912 and decisioning system 1932 as each other. However, in other examples, originating banks might not have the same transaction monitoring model 1912 and/or decisioning system 1932 as each other. Nevertheless, in examples, each bank has its own private embedding model.

As such, in connection with this payment request, the originating bank 1902 initiates the payment decisioning process and transmits the privacy-preserved query 1926 and receives the privacy-preserved embedding 1928. Since the originating bank 1902 implements the transaction monitoring model 1912 and the decisioning system 1932, there is no privacy-preserved query corresponding to the privacy-preserved query 1622 shown in FIG. 16 and there is also no privacy-preserved embedding corresponding to the privacy-preserved embedding 1624 shown in FIG. 16.

Additionally, in the example system 1900, two entities are involved in the payment decisioning process, namely the originating bank 1902 (which implements the decisioning system 1932) and the beneficiary bank 1904. In contrast, three entities are involved in the payment decisioning process in the example system 1600, namely the originating bank 1602, the beneficiary bank 1604 and the payment processor 1606.

As such, in some examples, such as in the example system 1600, payment decisioning functionality is provided by the payment processor 1606. In other examples, payment decisioning functionality may be provided by the originating bank 1902. Payment decisioning functionality may be provided by a different entity in further examples.

In summary, any processor may be used as an intermediary between banks. However, in some scenarios, there is no central processing node that controls labels etc. Instead, banks directly connect to each other, or connect to each other via an intermediary which does not control the labels etc. In such scenarios, creditor banks label their own decision models. As such, the decision model is federated in the sense that each bank model has the same weights. Thus, each bank would have an identical copy of the decision model or "processor model". The private embeddings models still operate in the manner in which they have been described herein.

*Threat Models*

One potential threat is a malicious bank. In examples, a bank is never presented with data, labels or the functioning of an external model outside of its trust domain. Thus, banks cannot evaluate the cost function informing updates for the embeddings the bank produces.

Surrogate approaches to data reconstruction and model extraction, which often rely on background knowledge and gradient matching for external model architectures, do not exist in such settings.

Training shadow models are infeasible without input/output black-box access in external nodes. This is commonly required to execute membership or property attacks through synthesis of fake data classified with high probability.

In examples, an orchestrator returns gradients to inform banks on how to improve account embeddings. However, the directionality of gradients is a priori meaningless for banks without exposure to labels. Adversarial poisoning attacks, where bank outputs are optimized to misrepresent anomalies with high confidence, use black-box exposure to anomaly outputs, which is not present in examples. Moreover, an orchestrator may still choose to endow DP on communicated gradients, adding a further anonymity layer.

Another potential threat is a malicious SWIFT. The architectural design described herein poses an impediment to popular attacks relying on shadow or surrogate models, due to a lack of shared model design details or black-box exposure. Well-calibrated LDP applied to data publication protects against reconstruction, extraction, inference and/or membership attacks. However, a malicious actor at SWIFT may adversarially engineer fake data at training time, or swap labels, in order to cause anomaly detection deficiencies that efficiently poison the model. This is, however, a universal weakness of supervised machine learning systems. The party responsible for labelling the data can do so in bad faith in order to induce the output behaviours they desire in the model. However, this only concerns SWIFT (as the labelling party). The impact is limited to incorrectly training the model and, thus, reducing its detection performance. It does not impact the privacy of data communicated from bank nodes.

Another potential threat is an outsider. Examples assume that banks are vetted for participation, and that encryption signatures are checked during communications. Eavesdroppers can see encrypted communications, but these comprise obfuscated data.

*Technical Effects*

A compartmentalized setting, as set out above, offers a range of benefits, considering common challenges associated with productionizing federated systems.

Heterogeneity will likely exist in the distributional properties and quantity of data hosted across banks; particularly in zip codes and flags. Example settings described herein expect homogeneity only in bank outputs. Thus, they avoid shared architectures with gradient pooling steps, which fail when data inputs cannot be globally standardized.

System adaptability is improved since data-sharing preferences of individual institutions may evolve over time. A bank may change its model or schema, subject to a partial retrain, without troubling other banks or interrupting the functioning of the system.

In terms of inference time scalability, in production, SWIFT requires little communication with banks at inference time. SWIFT can operate with high independence. Querying an embedding for a bank account may only be performed the first time this is observed, or when a bank communicates that an account's underlying details have changed.

In terms of predictive efficiency, de-identification models are algorithmically optimised to help SWIFT source useful information for anomaly detection. Pooling or score averaging is avoided, which is a common sources of predictive performance decays.

The inclusion of new transacting accounts in banks does not require model retrains if values for zip codes, flags and remainder features are previously observed. A bank model maps a new account to a valid embedded profile in latent space.

As explained above, examples described herein enable a good trade-off between privacy and model utility in downstream anomaly detection tasks. In particular, some features described herein (including, but not limited to, those relating to k-anonymity, obfuscation and LDP) increase privacy. However, they can also reduce anomaly detection accuracy. For example, noising increases privacy, but (intentionally) introduces noise that influences the downstream anomaly detection process. Examples enable the balance between privacy and model utility to be optimised for a given setting.

*Summary*

Examples described herein involve a centralized payment processing switch for automated processing of non-anomalous payment requests.

Examples described herein also include a federation of embedding models distributed across independent nodes controlled by account-holder data owners.

Each model encodes private data pertaining to individual citizens, producing a numerical embedding as its output.

After computing the embedding values, but prior to outputting them, the embedding models may noise and/or resample the embedding values. This endows them with LDP guarantees. In examples, consistent noise is applied to an account's embeddings whenever it is queried.

In examples, the federation involves a central node hosting transactional data and binary anomaly labels. This allows training of a central classifier model for anomaly detection using a binary supervised machine learning approach.

A communications protocol encrypts and transmits the privacy-endowed federated embeddings to this central node upon request.

The central model takes in the communicated account embeddings as part of its input.

A training regime enables cooperative training of the central model and federated embedding models.

Various types of example communications will now be described by way of example only.

In terms of requesting an account embedding from data owners, when an orchestrator requests a single account embedding from data owners, this request is augmented to cover a wide range of account identifiers, based on the first n characters of the hash of the account ID. This range contains k unique account IDs. This provides k-anonymity guarantees for the orchestrator. Data owners, as well as any actor intercepting messages, are unaware of the specific account being queried.

In terms of returning an embedding range to the orchestrator, this contains key and value vectors for each account in the augmented range, associated with a neural attention mechanism. A different technique may be used, for example where an attention mechanism is not used.

In terms of unlocking the relevant account embedding, upon receipt of key-value tuples, the central model produces a query array using centrally held transaction data. This is combined with keys to determine attention scores that weight the value of each embedding. A weighted sum of embedding values is dominated by the relevant originating (or beneficiary) account.

An example training procedure will now be described by way of example only.

The example procedure includes a step to train neural network components to compute the central model's query vector, and the federated key and value vectors, as well as downstream neural network components that process the results of the central model's attention mechanism into a central risk score.

During a training epoch, forward inference is completed given candidate parameter values across both federated embedding models and the central model as described above.

Back-propagation of gradient updates proceeds as normal within the central model. However, the following procedure is followed to propagate gradients updates for the federated embedding model parameters back to the federated nodes.

For the range of account identifiers based on the hash of the first n characters of account ID, gradients of the central model's loss function with respect to embedding outputs (keys and values) are communicated to the federated embedding models. The update is aggregated across the whole range of account IDs, i.e. only one update is given for the range.

The communicated embedding output gradients are then reparametrized into private model parameter gradients using the chain rule of partial differentiation. This means that the structure of the embedding models does not need to be known by the central model.

Federated embedding model parameters are not coupled between federated nodes.

Certain examples described herein may be implemented via instructions that are stored within a computer-readable storage medium, such as a non-transitory computer-readable medium. The computer readable medium may comprise one or more of a rotating magnetic disk, a rotating optical disk, a flash random access memory (RAM) chip, and other mechanically moving or solid-state storage media. In use, the instructions are executed by one or more of processors to cause said processor to perform the operations described above.

The above embodiments, variations and examples are to be understood as illustrative. Further embodiments, variations and examples are envisaged.

For example, in examples described above, an attention mechanism is used. The attention mechanism is especially effective where k-anonymity is used and where account embeddings for multiple customers are provided. However, an attention mechanism may not be used in other examples. For example, if k-anonymity is not used and an account embedding for only one customer is provided, an attention mechanism may not be used. Where an attention mechanism is not used, a key embedding, a value embedding, and/or a query embeddings may not be used. In a specific example in which an attention mechanism is not used, the account embedding includes only the value embedding, and the value embedding is provided directly to the decision model at the payment decisioning server.

Additionally, in examples described above, both an originating bank and a beneficiary bank are involved in the overall data journey in connection with the payment decisioning process. However, in other examples, one of the originating bank and the beneficiary bank is not involved in such data journey, for example if the bank in question is not part of the federated learning system. As long as the system has been trained with such an arrangement, the techniques described herein are still effective.

In some examples, the decision model operated by the payment decisioning entity (for example, a payment processor or financial institution) is supplemented by hand-engineered decision rule logic. In this context, hand-engineered decision rule logic concerns rules that are not learnt using an optimization process. Instead, the logic is written by a human being to apply the logic that they choose, where that logic is derived from a combination of domain knowledge and/or policy decisions.

Although certain components of each example have been separately described, it is to be understood that functionality described with reference to one example may be suitably implemented in another example, and that certain components may be omitted depending on the implementation. It is to be understood that any feature described in relation to any one example may be used alone, or in combination with other features described, and may also be used in combination with one or more features of any other of the examples, or any combination of any other of the examples. For example, features described with respect to the system components may also be adapted to be performed as part of the described methods. Furthermore, equivalents and modifications not described above may also be employed without departing from the scope of the invention, which is defined in the accompanying claims.

Several aspects, variations and examples in accordance with the present disclosure are set out in the following numbered clauses.

1. A method of preserving privacy for a transaction in a federated learning system, the federated learning system comprising a payment decisioning server associated with a payment decisioning entity and a financial institution server associated with a financial institution, the transaction involving a customer of the financial institution, the method comprising, at the payment decisioning server: transmitting, to the financial institution server, a query relating to the customer; receiving, from the financial institution server, a response to the query, the response comprising an account embedding, the account embedding having been derived by the financial institution server using account information associated with the customer as input to a financial institution private embedding model; and generating a transaction decision for the transaction using the account embedding and transaction data associated with the transaction.

2. A method according to clause 1, wherein the transaction data comprises an identifier associated with the customer, and wherein the query comprises a truncated version of the identifier associated with the customer.

3. A method according to clause 2, wherein neither the identifier associated with the customer nor the truncated version of the identifier associated with the customer is comprised in the response.

4. A method according to clause 2 or 3, wherein the identifier associated with the customer is a hashed version of a customer identifier of the customer.

5. A method according to any of clauses 1 to 4, wherein the account embedding comprises a key embedding and a value embedding, the key and value embeddings having been derived by the financial institution server using the account information associated with the customer of the financial institution as input to the financial institution private embedding model, and wherein the method comprises: deriving a query embedding using the transaction data as input to a payment decisioning entity private embedding model; and deriving a customer embedding using the query embedding, the key embedding and the value embedding as inputs to an attention mechanism, wherein the generating of the transaction decision for the transaction using the account embedding comprises generating the transaction decision for the transaction using an output of the attention mechanism.

6. A method according to clause 5, comprising: updating weights of the attention mechanism based on a loss function gradient with respect to weights of the payment decisioning entity private embedding model and weights of a payment decisioning entity decision model.

7. A method according to clause 5 or 6, wherein the payment decisioning entity private embedding model and the financial institution private embedding model have different weights, schema and/or architectures from each other.

8. A method according to any of clauses 1 to 7, wherein the account embedding comprises a further account embedding, the further account embedding having been derived by the financial institution server using account information associated with another customer of the financial institution as input to the financial institution private embedding model.

9. A method according to clause 8, wherein the other customer is not a party to the transaction.

10. A method according to any of clauses 1 to 9, wherein the account embedding comprises a noised embedding.

11. A method according to any of clauses 1 to 10, wherein the account embedding comprises a resampled embedding.

12. A method according to any of clauses 1 to 11, comprising: transmitting, to the financial institution server, a loss function gradient with respect to the account embedding.

13. A method according to any of clauses 1 to 12, wherein the federated learning system comprises a further financial institution server associated with a further financial institution, the transaction further involving a customer of the further financial institution, the method comprising, at the payment decisioning server: transmitting, to the further financial institution server, a query; and receiving, from the further financial institution server, a response to the query, the response comprising a further account embedding, the further account embedding having been derived by the further financial institution server using account information associated with the customer of the further financial institution as input to a further financial institution private embedding model, wherein the generating of the transaction decision for the transaction comprises using the further account embedding.

14. A method according to clause 13, wherein the financial institution private embedding model and the further financial institution private embedding model have different weights, schema and/or architectures from each other.

15. A method according to any of clauses 1 to 14, wherein the payment decisioning entity is a payment processor.

16. A method according to any of clauses 1 to 14, wherein the payment decisioning entity is a financial institution.

17. A method of preserving privacy for a transaction in a federated learning system, the federated learning system comprising a payment decisioning server associated with a payment decisioning entity and a financial institution server associated with a financial institution, the transaction involving a customer of the financial institution, the method comprising, at the financial institution server: receiving, from the payment processing server, a query relating to the customer; deriving, based on the received query, an account embedding, the deriving comprising using account information associated with the customer as input to a financial institution private embedding model; and transmitting, to the payment decisioning server, a response to the received query, the response comprising the account embedding.

18. A method according to clause 17, wherein the query comprises a truncated version of an identifier associated with the customer.

19. A method according to clause 18, wherein neither the identifier associated with the customer nor the truncated version of the identifier associated with the customer is comprised in the response.

20. A method according to clause 18 or 19, wherein the identifier associated with the customer is a hashed version of a customer identifier of the customer.

21. A method according to any of clause 17 to 20, wherein the account information comprises resampled account information, the method comprising: performing account information resampling to generate the resampled account information.

22. A method according to any of clauses 17 to 21, wherein the account embedding is a noised embedding, the method comprising: applying noise to an output of the financial institution private embedding model to generate the noised embedding.

23. A method according to clause 22, comprising: deriving the noise deterministically based on the received query.

24. A method according to any of clauses 17 to 23, comprising: receiving, from the payment decisioning server, a loss function gradient with respect to the account embedding.

25. A method according to clause 24, comprising: deriving a loss function with respect to weights of the financial institution private embedding model based on: the loss function gradient with respect to the account embedding; and a gradient of the account embedding with respect to the weights of the financial institution private embedding model.

26. A method according to clause 25, comprising: updating weights of the financial institution private embedding model based on the loss function with respect to weights of the financial institution private embedding model.

27. A method according to any of clauses 17 to 26, comprising: deriving, based on the received query, a further account embedding, the deriving comprising using account information associated with another customer of the financial institution as input to the financial institution private embedding model, wherein the response comprises the further account embedding.

28. A method according to clause 27, wherein the other customer is not a party to the transaction.

29. A method according to any of clauses 17 to 28, wherein the payment decisioning entity is a payment processor.

30. A method according to any of clauses 17 to 28, wherein the payment decisioning entity is a financial institution.

31. A method of enabling training of a machine learning model in a federated learning system, the federated learning system comprising a payment decisioning server associated with a payment decisioning entity and a financial institution server associated with a financial institution, the method comprising, at the payment decisioning server: receiving, from the financial institution server, an account embedding, the account embedding having been derived by the financial institution server using account information associated with a customer of the financial institution as input to a financial institution private embedding model; calculating a loss function gradient with respect to the account embedding; and transmitting, to the financial institution server, the loss function gradient.

32. A method of training a machine learning model in a federated learning system, the federated learning system comprising a payment decisioning server associated with a payment decisioning entity and a financial institution server associated with a financial institution, the method comprising, at the financial institution server: transmitting, to the payment decisioning server, an account embedding, the account embedding having been derived by the financial institution server using account information associated with a customer of the financial institution as input to a financial institution private embedding model; receiving, from the payment decisioning server, a loss function gradient with respect to the account embedding; deriving a loss function with respect to weights of the financial institution private embedding model based on: (i) the loss function gradient with respect to the account embedding and (ii) a gradient of the account embedding with respect to the weights of the financial institution private embedding model; and updating weights of the financial institution private embedding model based on the loss function with respect to weights of the financial institution private embedding model.

33. A server configured to perform a method according to any of clauses 1 to 32.

34. A system, comprising: a client device configured to initiate a transaction; a financial institution server configured to implement a process flow for the transaction, the financial institution server being communicatively coupled to the client device via a first computer network; and a payment decisioning server configured to generate a transaction decision, the payment decisioning server being communicatively coupled to the financial institution server via a second computer network, wherein the payment decisioning server is configured to perform a method according to any of clauses 1 to 16 and/or a method according to clause 31, and wherein the financial institution server is configured to perform a method according to any of clauses 17 to 30 and/or a method according to clause 32.

**Claims**

1. A method of preserving privacy for a transaction in a federated learning system, the federated learning system comprising a payment decisioning server associated with a payment decisioning entity and a financial institution server associated with a financial institution, the transaction involving a customer of the financial institution, the method comprising, at the payment decisioning server:

    transmitting, to the financial institution server, a query relating to the customer;
    receiving, from the financial institution server, a response to the query, the response comprising an account embedding, the account embedding having been derived by the financial institution server using account information associated with the customer as input to a financial institution private embedding model; and
    generating a transaction decision for the transaction using the account embedding and transaction data associated with the transaction.

2. A method according to claim 1, wherein the transaction data comprises an identifier associated with the customer, and wherein the query comprises a truncated version of the identifier associated with the customer, optionally wherein:

    neither the identifier associated with the customer nor the truncated version of the identifier associated with the customer is comprised in the response; and/or
    the identifier associated with the customer is a hashed version of a customer identifier of the customer.

3. A method according to claim 1 or 2, wherein the account embedding comprises a key embedding and a value embedding, the key and value embeddings having been derived by the financial institution server using the account information associated with the customer of the financial institution as input to the financial institution private embedding model, and wherein the method comprises:

    deriving a query embedding using the transaction data as input to a payment decisioning entity private embedding model; and
    deriving a customer embedding using the query embedding, the key embedding and the value embedding as inputs to an attention mechanism,
    wherein the generating of the transaction decision for the transaction using the account embedding comprises generating the transaction decision for the transaction using an output of the attention mechanism,
    optionally wherein:

        the method comprises updating weights of the attention mechanism based on a loss function gradient with respect to weights of the payment decisioning entity private embedding model and weights of a payment decisioning entity decision model; and/or

the payment decisioning entity private embedding model and the financial institution private embedding model have different weights, schema and/or architectures from each other.

4. A method according to any of claims 1 to 3, wherein the account embedding comprises a further account embedding, the further account embedding having been derived by the financial institution server using account information associated with another customer of the financial institution as input to the financial institution private embedding model,

optionally wherein the other customer is not a party to the transaction.

5. A method according to any of claims 1 to 4, wherein the account embedding comprises a noised embedding and/or a resampled embedding.

6. A method according to any of claims 1 to 5, comprising:

transmitting, to the financial institution server, a loss function gradient with respect to the account embedding.

7. A method according to any of claims 1 to 6, wherein the federated learning system comprises a further financial institution server associated with a further financial institution, the transaction further involving a customer of the further financial institution, the method comprising, at the payment decisioning server:

transmitting, to the further financial institution server, a query; and
receiving, from the further financial institution server, a response to the query, the response comprising a further account embedding, the further account embedding having been derived by the further financial institution server using account information associated with the customer of the further financial institution as input to a further financial institution private embedding model,
wherein the generating of the transaction decision for the transaction comprises using the further account embedding,
optionally wherein the financial institution private embedding model and the further financial institution private embedding model have different weights, schema and/or architectures from each other.

8. A method of preserving privacy for a transaction in a federated learning system, the federated learning system comprising a payment decisioning server associated with a payment decisioning entity and a financial institution server associated with a financial institution, the transaction involving a customer of the financial institution, the method comprising, at the financial institution server:

receiving, from the payment processing server, a query relating to the customer;
deriving, based on the received query, an account embedding, the deriving comprising using account information associated with the customer as input to a financial institution private embedding model; and
transmitting, to the payment decisioning server, a response to the received query, the response comprising the account embedding.

9. A method according to claim 8, wherein the query comprises a truncated version of an identifier associated with the customer,
optionally wherein:

neither the identifier associated with the customer nor the truncated version of the identifier associated with the customer is comprised in the response; and/or
the identifier associated with the customer is a hashed version of a customer identifier of the customer.

10. A method according to claim 8 or 9, wherein the account information comprises resampled account information, the method comprising:
performing account information resampling to generate the resampled account information.

11. A method according to any of claims 8 to 10, wherein the account embedding is a noised embedding, the method comprising:

applying noise to an output of the financial institution private embedding model to generate the noised embedding,
optionally wherein the method comprises deriving the noise deterministically based on the received query.

**12.** A method according to any of claims 8 to 11, comprising:

receiving, from the payment decisioning server, a loss function gradient with respect to the account embedding. optionally wherein the method comprises:

deriving a loss function with respect to weights of the financial institution private embedding model based on:

the loss function gradient with respect to the account embedding; and
a gradient of the account embedding with respect to the weights of the financial institution private embedding model,

optionally wherein the method further comprises updating weights of the financial institution private embedding model based on the loss function with respect to weights of the financial institution private embedding model.

**13.** A method according to any of claims 8 to 12, comprising:

deriving, based on the received query, a further account embedding, the deriving comprising using account information associated with another customer of the financial institution as input to the financial institution private embedding model,
wherein the response comprises the further account embedding,
optionally wherein the other customer is not a party to the transaction.

**14.** A method according to any of claims 1 to 13, wherein the payment decisioning entity is a payment processor or a financial institution.

**15.** A server configured to perform a method according to any of claims 1 to 14.

# Fig. 1A

# Fig. 1B

# Fig. 1C

# Fig. 2A

# Fig. 2B

# Fig. 3A

# Fig. 3B

# Fig. 4

# Fig. 5A

# Fig. 5B

EP 4 432 198 A1

# Fig. 6

600

| | Insider | | Outsider |
|---|---|---|---|
| | SWIFT | Bank | |
| Data Reconstruction or Retrieval | Y | Y | Y |
| Model Surrogate Extraction | Y | Y | Y |
| Train Membership Attack | Y | Y | Y |
| Data Property Inferences | Y | Y | Y |
| Poisoning Performance | - | Y | Y |

# Fig. 7

Fig. 8

EP 4 432 198 A1

# Fig. 9

900

| aFg! | B 1 | ... | ... | er65 | B 2 | ... | ... | £ ... | 0 |
|------|-----|-----|-----|------|-----|-----|-----|-------|---|

Debtor    Beneficiary    Meta-Data    Fraud

902    904    906    908

# Fig. 10

1000

**Example SWIFT transaction**

| aFg! | B 1 | er65 | B 2 | ... |

Debtor    Beneficiary

aFg! -> aF
er65 -> er

1002

Encrypted Communication

1004

1006

**Matching Accounts**

| | | | |
|------|-----|-----|------|
| aFg! | ... | ... | A, B |
| aFi^ | ... | ... | C |
| aFt£ | ... | | C |
| aF(* | ... | ... | A |

☐ : Resampled Data

1008

$\phi_b(X_{Bank})$
$b = 1,...,N$

1010

1012

**Keys**

| aFg! | [0.1, -1.2, 0.5] | |
|------|------------------|---|
| aFi^ | [0.3, 1.2, -0.1] | |
| aFt£ | [-2.3, 0.6, 1.3] | |
| aF(* | [-2.1, 0.1, 0.3] | |

**Values**

| aFg! | [-2.1, 0.3, 0.2] | |
|------|------------------|---|
| aFi^ | [0.5, -1.1, 0.8] | |
| aFt£ | [1.7, 0.6, -1.6] | |
| aF(* | [-1.2, 0.4, 0.3] | |

1014

**Fig. 11**

1100

Keys (1102)

| aFg! | [0.1, -1.2, 0.5] |
| aFı^ | [0.3, 1.2, -0.1] |
| aFt£ | [-2.3, 0.6, 1.3] |
| aF(* | [-2.1, 0.1, 0.3] |

Values (1104)

| aFg! | [-2.1, 0.3, 0.2] |
| aFı^ | [0.5, -1.1, 0.8] |
| aFt£ | [1.7, 0.6, -1.6] |
| aF(* | [-1.2, 0.4, 0.3] |

⊕

Noise (1106)

Keys noise:
[0.2, -0.1, 0.1]
[-0.1, 0.1, -0.2]
[-0.3, 0.0, 0.1]
[0.1, 0.1, 0.2]

Values noise:
[0.2, -0.1, 0.1]
[-0.1, 0.1, -0.2]
[-0.3, 0.0, 0.1]
[0.1, 0.1, 0.2]

Encrypted Communication (1108)

Noised Keys:
[0.3, -1.3, 0.6]
[0.2, 1.3, -0.3]
[-2.6, 0.6, 1.4]
[-2.0, 0.2, 0.5]

Noised Values (1110):
[-1.9, 0.2, 0.3]
[0.4, -1.0, 0.6]
[1.4, 0.6, -1.5]
[-1.1, 0.5, 0.5]

Debtor: aFg! | B 1

Beneficiary (1112): B 2

# Fig. 12

1200

1202 $\psi(X_{Swift})$

1204 aFg! | B 1 | er65 | B 2 | £ | ... 

1206 Queries [0.2, -1.1, 0.9] [-0.4, 0.2, 2.3]

1208 Noised Keys
[0.3, -1.3, 0.6]
[0.2, 1.3, -0.3]
[-2.6, 0.6, 1.4]
[-2.0, 0.2, 0.5]

1212 Noised Values
[-1.9, 0.2, 0.3]
[0.4, -1.0, 0.6]
[1.4, 0.6, -1.5]
[-1.1, 0.5, 0.5]

1210 Attention $\sigma(K \cdot Q) \cdot V$

1214 Unlocked Profiles
[-1.8, 0.2, 0.2]
[2.1, 0.1, -0.3]

1216 Transaction Features
$t$ | $x_1, x_2, x_3, \dots$

# Fig. 13

EP 4 432 198 A1

1300

| $t_{-n}$ | $x_{-n}$ | [-1.8, 0.2, 0.2] | [3.1, 2.5, -0.8] |
|------|------|------|------|
| ⋮ | ⋮ | ⋮ | ⋮ |
| $t_{-2}$ | $x_{-2}$ | [-1.8, 0.2, 0.2] | [-1.7, 1.1, 0.6] |
| $t_{-1}$ | $x_{-1}$ | [-1.8, 0.2, 0.2] | [1.0, 0.4, 0.3] |
| $t$ | $x_1, x_2, x_3, ...$ | [-1.8, 0.2, 0.2] | [2.1, 0.1, -0.3] |

1304     1308     1306

🕐 **Features**    **Debtor**    **Beneficiary**

Representation Learning

Temporal Aggregation

Binary Classifier

**Recurrent Model**

1302

$f(\cdot)$

| 🕐 $t$ | $f(x_1, x_2, ...)$ |
|------|------|
| $t_{-1}$ | ... |
| $t_{-2}$ | ... |
| $t_{-n}$ | ... |

**Score**

Fig. 14

# Fig. 15

EP 4 432 198 A1

# Fig. 16

EP 4 432 198 A1

# Fig. 17

1700

**Pre-processing**

SWIFT

**Times and Amounts**
Expansions and transformations
Per-group standardisation

**Tokens**
Banking entities and currencies

**Numerical Mappings**
Names and addresses

Bank Data

**Tokens**
Banking entities and flags

**Numerical Mappings**
Names and addresses

Downsampling

**Representation Learning**

**Embedded Tokens**
Across both datasets

Embedding Layer

**Left Swift-Bank join**
On Ordering account
On Beneficiary account

**Numerical Features**
Compare Details

Multilayer Perceptron

**Classifier**

**Loss Function**
Binary Cross Entropy

Class Weights

Regularisers

EP 4 432 198 A1

# Fig.18

1800

**Pre-processing**

SWIFT

**Times and Amounts**
Expansions and transformations
Per-group standardisation

**Tokens**
Banking entities and currencies

**Numerical Mappings 1**
Names and addresses

**Numerical Mappings 2**
Names and addresses

Bank, K-Accounts

**Numerical Mappings 1**
Names and addresses

**Tokens**
Banking entities and flags

**Numerical Mappings 2**
Names and addresses

Downsampling

Embedding Layers

Local Differential Privacy

**Representation Learning**

**SWIFT Features**
Embedded Tokens
Numerical Data

**Attention
Values**

QUERY

**Attention**

K-KEYS

K-VALUES

Multilayer Perceptron

**Classifier**

**Loss Function**
Binary Cross Entropy

Class Weights

Regularisers

**Account
Alignment**

**Loss Function**
Mean Squared Error

# Fig. 19

# EUROPEAN SEARCH REPORT

**Application Number**

EP 23 16 1993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/272262 A1 (PAYPAL INC [US]) 29 December 2022 (2022-12-29) * abstract; claims 1-20; figures 1-8 * * paragraphs [0011] – [0088] * | 1-15 | INV.<br>G06Q20/38<br>G06Q20/40<br>G06N3/098 |
| X | US 2021/182803 A1 (MINTZ IDO MEIR [IL] ET AL) 17 June 2021 (2021-06-17) * abstract; claims 1-20; figures 1A-5B * * paragraphs [0004] – [0006], [0015] – [0065] * | 1-15 | |
| X | US 2022/108329 A1 (WU PENG [US] ET AL) 7 April 2022 (2022-04-07) * abstract; claims 1-20; figures 1-4B * * paragraphs [0005] – [0050], [0062] – [0143] * | 1-15 | |
| X | US 2020/226460 A1 (BRUSS CHRISTOPHER [US] ET AL) 16 July 2020 (2020-07-16) * abstract; claims 1-20; figures 1-7 * * paragraphs [0003], [0011] – [0059] * | 1-15 | TECHNICAL FIELDS SEARCHED (IPC) |
| X | US 2021/027300 A1 (CHETIA CHIRANJEET [US] ET AL) 28 January 2021 (2021-01-28) * abstract; claims 1-20; figures 1-5D * * paragraphs [0005] – [0029], [0040] – [0107] * | 1-15 | G06Q<br>G07G<br>G06N |
| X | US 2020/279288 A1 (SONG SUQIANG [US]) 3 September 2020 (2020-09-03) * abstract; claims 1-20; figures 1-8 * * paragraphs [0002], [0008] – [0010], [0020] – [0072] * | 1,8,15 | |

-/--

The present search report has been drawn up for all claims

| Place of search | Date of completion of the search | Examiner |
|---|---|---|
| The Hague | 9 June 2023 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 16 1993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUAN XIAOYONG ET AL: "Beyond Class-Level Privacy Leakage: Breaking Record-Level Privacy in Federated Learning", IEEE INTERNET OF THINGS JOURNAL, [Online] vol. 9, no. 4, 15 February 2022 (2022-02-15), pages 2555-2565, XP093053227, DOI: 10.1109/JIOT.2021.3089713 Retrieved from the Internet: URL:https://ieeexplore.ieee.org/stampPDF/getPDF.jsp?tp=&arnumber=9456909&ref=aHR0cHM6Ly9pZWVleHBsb3JlLmllZWUub3JnL2RvY3VtZW50Lzk0NTY5MDk=> [retrieved on 2023-06-09] * the whole document * | 1-15 | |
| A | Wellard Sarah ET AL: "Privacy-enhancing technologies prize challenges - UKRI", , 22 December 2022 (2022-12-22), pages 1-11, XP093052612, INTERNET Retrieved from the Internet: URL:https://www.ukri.org/blog/privacy-enhancing-technologies-prize-challenges/ [retrieved on 2023-06-07] * the whole document * | 1-15 | TECHNICAL FIELDS SEARCHED (IPC) |

The present search report has been drawn up for all claims

| Place of search | Date of completion of the search | Examiner |
|---|---|---|
| The Hague | 9 June 2023 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1993

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2023

| Patent document cited in search report | | Publication date | Patent family member(s) | | Publication date |
|---|---|---|---|---|---|
| WO 2022272262 | A1 | 29-12-2022 | NONE | | |
| US 2021182803 | A1 | 17-06-2021 | NONE | | |
| US 2022108329 | A1 | 07-04-2022 | CN | 114387074 A | 22-04-2022 |
| | | | US | 2022108329 A1 | 07-04-2022 |
| US 2020226460 | A1 | 16-07-2020 | US | 2020226460 A1 | 16-07-2020 |
| | | | US | 2020349437 A1 | 05-11-2020 |
| US 2021027300 | A1 | 28-01-2021 | NONE | | |
| US 2020279288 | A1 | 03-09-2020 | NONE | | |

EPO FORM P0459

For more details about this annex : see Official Journal of the European Patent Office, No. 12/82